# EUROPÄISCHE PATENTANMELDUNG

(11) **EP 4 736 812 A1**
(43) Veröffentlichungstag der Anmeldung: **06.05.2026**
(21) Anmeldenummer: 24209888.7
(22) Anmeldetag: 30.10.2024
(51) Int. Cl.: A61C 17/34

(54) **FUNKTIONSMODUL ZUM BEREITSTELLEN GEGENLÄUFIG OSZILLIERENDER BEWEGUNGEN FÜR EIN HANDGERÄT**

(71) Anmelder: MT.DERM GmbH, 12307 Berlin (DE)
(72) Erfinder: SCHERKOWSKI, Dirk, 12489 Berlin (DE)
(74) Vertreter: Bittner, Thomas L.

(57) **Zusammenfassung**

Es ist ein Funktionsmodul zum Bereitstellen oszillierender Bewegungen für ein Handgerät geschaffen, mit einer Rotationsachse, einem Antriebsbauteil (1) mit einer Antriebsschnittstelle, einer ersten Rotationsscheibe (7a) und einer zweiten Rotationsscheibe (7b). Das Antriebsbauteil (1) ist eingerichtet, über die Antriebsschnittstelle entsprechend einer oszillierenden Antriebsbewegung angetrieben zu werden, derart, dass sich das Antriebsbauteil (1) oszillierend bewegt. Die erste Rotationsscheibe (7a) ist um die Rotationsachse rotierbar angeordnet und eingerichtet, eine durch die oszillierende Bewegung des Antriebsbauteils angetriebene erste oszillierende Rotation um die Rotationsachse auszuführen. Die zweite Rotationsscheibe (7b) ist um die Rotationsachse rotierbar angeordnet und eingerichtet, eine durch die oszillierende Bewegung des Antriebsbauteils angetriebene zweite oszillierende Rotation um die Rotationsachse auszuführen, wobei die zweite oszillierende Rotation gegenläufig zu der ersten oszillierenden Rotation ist. Weiterhin ist ein Handgerät bereitgestellt.

## Beschreibung

Die Erfindung betrifft ein Funktionsmodul zum Bereitstellen gegenläufig oszillierender Bewegungen für ein Handgerät sowie ein Handgerät.

### Hintergrund

Es sind verschiedene Anwendungen bekannt, in denen es gewünscht ist, mittels Handgeräten oszillierend-rotatorische Bewegung von Funktionselementen bereitzustellen. Hierbei erstrecken sich die Anwendungsfelder auf den kosmetischen, hygienischen und medizinischen Bereich. Beispielsweise sind elektrische Zahnbürsten verbreitet, bei denen ein Bürstenkopf rotatorisch oszilliert. Auch für die Hautpflege sind beispielsweise Bürsten oder abrasive Oberflächen bekannt, die eine Rotationsbewegung ausführen. Für eine Stimulation von Hautoberfläche, etwa zur Verbesserung der Durchblutung oder für den sexuellen Lustgewinn, sind rotatorisch-oszillierende Bewegungen ebenfalls vorteilhaft. Weiterhin lassen sich derartige Bewegungen von Handgeräten im handwerklichen Bereich einsetzen, beispielsweise zum Schleifen oder Feilen.

Insbesondere im Bereich der elektrischen Zahnbürsten sind verschiedene, als Handstücke ausgebildete Antriebsmodule bekannt. Während Handstücke, die bereits eine oszillierend-rotierende Bewegung an ein Funktionsmodul übertragen, verbreitet sind, sind auch solche Handstücke für elektrische Zahnbürsten bekannt, welche eine linear-oszillierende Bewegung an der Schnittstelle zum Bürstenkopf bereitstellen. Ein Verbindungsmechanismus für ein solches System ist beispielsweise aus dem Dokument WO 2019/005603 A1 bekannt.

Für Bereitstellen von komplexen oszillierenden Bewegungen in Handgeräten, welche mittels eines einzigen Motors angetrieben werden, der eine bestimmte Bewegungsform bereitstellt, fehlt es bisher an Lösungen.

### Zusammenfassung

Aufgabe der Erfindung ist es, verbesserte Technologien für Funktionsmodule zum Bereitstellen oszillierender Bewegungen für ein Handgerät bereitzustellen, welche insbesondere eine kompakte Bauweise und zuverlässige Kraftübertragung ermöglichen.

Zur Lösung der Aufgabe ist ein Funktionsmodul zum Bereitstellen oszillierender Bewegungen für ein Handgerät geschaffen. Das Funktionsmodul weist eine Rotationsachse, welche bevorzugt senkrecht zu einer Längsrichtung des Funktionsmoduls verlaufend angeordnet ist, sowie ein Antriebsbauteil mit einer Antriebsschnittstelle auf. Das Antriebsbauteil ist eingerichtet, über die Antriebsschnittstelle entsprechend einer oszillierenden Antriebsbewegung angetrieben zu werden, derart, dass sich das Antriebsbauteil oszillierend bewegt. Weiter weist das Funktionsmodul eine erste Rotationsscheibe und eine zweite Rotationsscheibe auf. Die erste Rotationsscheibe ist um die Rotationsachse rotierbar angeordnet und eingerichtet, eine durch die oszillierende Bewegung des Antriebsbauteils angetriebene erste oszillierende Rotation um die Rotationsachse auszuführen. Die zweite Rotationsscheibe ist um die Rotationsachse rotierbar angeordnet und eingerichtet, eine durch die oszillierende Bewegung des Antriebsbauteils angetriebene zweite oszillierende Rotation der zweiten Rotationsscheibe um die Rotationsachse auszuführen. Die zweite oszillierende Rotation ist hierbei gegenläufig zu der ersten oszillierenden Rotation. Alternativ zu einer zu der Längsrichtung senkrechten Anordnung kann die Rotationsachse in einer anderen Richtung ausgerichtet sein, beispielsweise parallel zu der Längsrichtung.

Gemäß einem weiteren Aspekt ist ein Handgerät bereitgestellt, welches ein Antriebsmodul und ein offenbarungsgemäßes Funktionsmodul aufweist. Hierbei ist das Antriebsmodul eingerichtet, eine oszillierende Antriebsbewegung, beispielsweise eine oszillierende lineare Antriebsbewegung, an einer Antriebsmodul-Antriebsschnittstelle bereitzustellen, und das Funktionsmodul ist mit dem Antriebsmodul derart verbunden, dass die an der Antriebsmodul-Antriebsschnittstelle bereitgestellte oszillierende Antriebsbewegung das Antriebsbauteil antreibt.

Mittels des Antriebsbauteils sowie der Interaktion von Anschlussstellen und Rotationsanschlussstellen kann eine besonders einfache konstruktive Ausgestaltung ohne zusätzliche Getriebebauteile bereitgestellt sein, welche das Bereitstellen einer gegenläufig oszillierenden Rotationsbewegung in einem Funktionsmodul ermöglicht.

Das Funktionsmodul ist mit Rotationsscheiben gebildet. Hierbei ist eine Scheibe im Sinne der vorliegenden Offenbarung eine Struktur mit in zwei Raumrichtungen flächiger Erstreckung, welche in der dritten Raumrichtung eine im Vergleich zur flächigen Erstreckung verhältnismäßig geringe Ausdehnung aufweist, In bevorzugten Ausführungen weisen die Rotationsscheiben hierbei einen in der flächigen Erstreckung im Wesentlichen kreisförmigen Querschnitt auf. Hierbei kann der kreisförmige Querschnitt unterbrochen oder abgewandelt sein, beispielsweise um eine erste bzw. zweite Aussparung zu bilden, wie diese nachfolgend im Einzelnen beschrieben sind. In alternativen Ausgestaltungen weisen Rotationsscheiben einen nichtkreisförmigen Querschnitt auf, beispielsweise einen ovalen, polygonalen oder frei geformten Querschnitt. Insbesondere ist ein Querschnitt der Rotationsscheiben so gewählt, dass sich mittels der gegenläufig oszillierenden Rotation der Rotationsscheiben eine für eine gegebene Anwendung vorteilhafte Funktionsbewegung erreichen lässt.

Es kann vorgesehen sein, dass das Antriebsbauteil eingerichtet ist, über die Antriebsschnittstelle entsprechend einer oszillierenden linearen Antriebsbewegung entlang einer Längsrichtung des Funktionsmoduls angetrieben zu werden, derart, dass sich das Antriebsbauteil entlang der Längsrichtung oszillierend linear bewegt. Hierbei kann dann das Antriebsbauteil eine erste Anschlussstelle und eine zweite Anschlussstelle aufweisen, wobei die erste Anschlussstelle und die zweite Anschlussstelle entlang einer Querrichtung, welche senkrecht sowohl zu der Längsrichtung als auch zu der Rotationsachse verläuft, auf gegenüberliegenden Seiten der Rotationsachse angeordnet sind. Weiterhin kann vorgesehen sein, dass die erste Anschlussstelle und die zweite Anschlussstelle bei einem Antrieb des Antriebsbauteils jeweils eine oszillierende Linearbewegung entlang der Längsrichtung ausführen, die erste Rotationsscheibe eine erste Rotationsanschlussstelle aufweist, welche mit der ersten Anschlussstelle derart verbunden ist, dass die oszillierende Linearbewegung der ersten Anschlussstelle auf die erste Rotationsanschlussstelle übertragen wird, um die erste oszillierende Rotation der ersten Rotationsscheibe um die Rotationsachse zu bewirken; und die zweite Rotationsscheibe eine zweite Rotationsanschlussstelle aufweist, welche mit der zweiten Anschlussstelle derart verbunden ist, dass die oszillierende Linearbewegung der zweiten Anschlussstelle auf die zweite Rotationsanschlussstelle übertragen wird, um die zu der ersten oszillierenden Rotation gegenläufige zweite oszillierende Rotation der zweiten Rotationsscheibe um die Rotationsachse zu bewirken.

Das Antriebsbauteil kann einstückig ausgebildet sein. Hierbei kann in entsprechenden Ausführungen die Antriebsschnittstelle ein entlang der Längsrichtung proximales Ende des Antriebsbauteils definieren und die Anschlussstellen können an einem dem proximalen Ende gegenüberliegenden distalen Ende des Antriebsbauteils angeordnet sein. Das distale Ende kann hierbei gabelförmig ausgebildet sein, wobei sich zwei Ausformungen im Wesentlichen parallel entlang der Längsachse erstrecken und die erste Anschlussstelle in einem distalen Endbereich einer der Ausformungen gebildet ist und die zweite Anschlussstelle in einem distalen Endbereich der anderen der Ausformungen gebildet ist. In verschiedenen Ausführungen kann hierbei vorgesehen sein, dass sich die Ausformungen nicht streng parallel entlang der Längsachse erstrecken, sondern je nach konstruktiven Gegebenheiten schräg oder mit abweichender Formgebung verlaufen, wobei eine im Wesentlichen entlang der Längsrichtung parallele Erstreckung sich zwar nicht für einzelne Abschnitte, jedoch für die Ausformungen insgesamt ergibt.

In alternativen Ausgestaltungen kann das Antriebsbauteil mehrteilig ausgebildet sein. Beispielsweise können sich an ein proximales Endelement des Antriebsbauteil zwei distale Endelemente anschließen, an deren Ende die Anschlussstellen gebildet sind. Die Verbindung von proximalem Endelement und distalen Endelementen kann hierbei beweglich ausgestaltet sein. Hierdurch kann insbesondere ein Bewegungsausgleich für eine Relativbewegung der Anschlussstellen in der Querrichtung ermöglicht sein, welche sich dadurch ergibt, dass sich die Rotationsanschlussstellen der Rotationsscheiben auf einer Kreisbahn konzentrisch um die Rotationsachse bewegen und somit keine reine Linearbewegung in Längsrichtung ausführen können. Zwischen dem proximalen Endelement und den distalen Endelementen kann jeweils eins oder mehrere Zwischenelemente vorgesehen sein, welche das proximale Endelement beweglich mit dem betreffenden distalen Endelement verbinden. Die Ausgestaltung des jeweiligen einen oder der jeweiligen mehreren Zwischenelementen kann hierbei gemäß den konstruktiven Anforderungen einer gegebenen Ausführungsform erfolgen.

Bei Ausgestaltungen, bei denen das Antriebsbauteil einstückig ausgebildet ist, kann ein Bewegungsausgleich für eine Relativbewegung der Anschlussstellen in der Querrichtung, welche sich durch eine Bewegung der Rotationsanschlussstellen der Rotationsscheiben auf einer Kreisbahn konzentrisch um die Rotationsachse ergeben, dadurch ermöglicht sein, dass sich das Antriebsbauteil elastisch verformt. Insbesondere kann bei einer gabelförmigen Ausbildung des Antriebsbauteils eine elastische Verformung der Ausformungen vorgesehen sein, wobei die Ausformungen in diesem Fall eine solche Verformung erlaubend ausgestaltet sind.

Als Alternative zu einem Bewegungsausgleich für eine Relativbewegung der Anschlussstellen in der Querrichtung durch das Antriebsbauteil oder in Ergänzung hierzu kann vorgesehen sein, dass eine Relativbewegung in der Querrichtung aufgrund einer Bewegung der Rotationsanschlussstellen der Rotationsscheiben auf einer Kreisbahn konzentrisch um die Rotationsachse durch die Ausgestaltung der Rotationsanschlussstellen kompensiert ist, wie nachfolgend im Einzelnen erläutert.

Die Verbindung zwischen der ersten Anschlussstelle und der ersten Rotationsanschlussstelle sowie die Verbindung zwischen der zweiten Anschlussstelle und der zweiten Rotationsanschlussstelle kann über ein jeweiliges stiftförmiges Verbindungselement erfolgen. Insbesondere kann ein jeweiliges stiftförmiges Verbindungselement zumindest eine translatorische Bewegung verhindernd mit der ersten Anschlussstelle und der zweiten Anschlussstelle verbunden sein. Das jeweilige Stiftelement kann sich dann zu den betreffenden Rotationsanschlussstellen erstrecken, mit denen es verbunden ist. Insbesondere kann eine Verbindung mit einer Rotationsanschlussstelle dadurch erfolgen, dass das betreffende stiftförmige Verbindungselement durch eine Aussparung, insbesondere eine Bohrung, in der betreffenden Rotationsscheibe geführt ist, welche die Rotationsanschlussstelle bildet.

Es kann jeweils ein stiftförmiges Verbindungselement als Teil der ersten Anschlussstelle und als Teil der zweiten Anschlussstelle gebildet sein. Somit erstreckt sich die betreffende Anschlussstelle in Form des stiftförmigen Verbindungselements zu der betreffenden Rotationsanschlussstelle, mit der es verbunden ist, wobei dann eine Verbindung mit der Rotationsanschlussstelle insbesondere dadurch erfolgen kann, dass das betreffende stiftförmige Verbindungselement durch eine Aussparung, insbesondere eine Bohrung, in der betreffenden Rotationsscheibe geführt ist, welche die Rotationsanschlussstelle bildet. Ein betreffendes stiftförmiges Verbindungselement kann einstückig mit dem Antriebsbauteil bzw. dem die betreffende Anschlussstelle umfassenden distalen Endelement ausgebildet sein. Alternativ kann das betreffende stiftförmige Verbindungselement fest, bevorzugt unlösbar, mit dem Antriebsbauteil bzw. dem die betreffende Anschlussstelle umfassenden distalen Endelement verbunden und hierdurch Teil der betreffenden Anschlussstelle sein.

Ein Bewegungsausgleich für eine Relativbewegung der Anschlussstellen in der Querrichtung, welche sich durch eine Bewegung der Rotationsanschlussstellen der Rotationsscheiben auf einer Kreisbahn konzentrisch um die Rotationsachse ergeben, kann dadurch ermöglicht sein, dass sich die stiftförmigen Verbindungselemente elastisch verformen. Gemäß den vorangehend erläuterten Ausgestaltungen der stiftförmigen Verbindungselemente kann somit eine Ausgestaltung eines Bewegungsausgleichs durch elastische Verformung des Antriebsbauteil oder eine Alternative bzw. Ergänzung hierzu bereitgestellt sein.

Die erste Rotationsanschlussstelle und/oder die zweite Rotationsanschlussstelle kann als Langloch gebildet sein, welches gerade in radialer Richtung der ersten Rotationsscheibe bzw. der zweiten Rotationsscheibe verläuft. Das Langloch kann hierbei insbesondere (mit seinen Seitenwänden) einen Anschlag in Umfangsrichtung der betreffenden Rotationsscheibe bilden, so dass ein in bzw. durch das Langloch greifendes Übertragungs- bzw. Verbindungselement, insbesondere ein stiftförmiges Verbindungselement, von der bzw. als Teil der betreffenden Anschlussstelle bei einer Bewegung in Längsrichtung eine Rotation der Rotationsscheibe bewirkt. Gleichzeitig kann sich das Übertragungs- bzw. Verbindungselement in radialer Richtung entlang des Langlochs bewegen, um einen Bewegungsausgleich in der Querrichtung bereitzustellen. In bevorzugten Ausgestaltungen findet hierbei keine Relativbewegung der Anschlussstellen in der Querrichtung statt. Alternativ kann zusätzlich eine Relativbewegung der Anschlussstellen in der Querrichtung vorgesehen sein.

Die erste Rotationsscheibe kann eine erste Aussparung aufweisen, welche im Bereich der zweiten Anschlussstelle derart angeordnet ist, dass die oszillierende Linearbewegung der zweiten Anschlussstelle nicht auf die erste Rotationsscheibe übertragen wird und die zweite Rotationsscheibe kann eine zweite Aussparung aufweisen, welche im Bereich der ersten Anschlussstelle derart angeordnet ist, dass die oszillierende Linearbewegung der ersten Anschlussstelle nicht auf die zweite Rotationsscheibe übertragen wird.

Die erste Aussparung und/oder die zweite Aussparung kann als gekrümmtes Langloch gebildet sein, wobei die Positionierung des gekrümmten Langlochs relativ zu der Rotationsachse und der Verlauf der Krümmung des gekrümmten Langlochs derart ausgestaltet sind, dass ein Abstand (insbesondere ein Nullabstand) der zweiten Anschlussstelle (bei gekrümmtem Langloch der ersten Rotationsscheibe) bzw. der ersten Anschlussstelle (bei gekrümmtem Langloch der ersten Rotationsscheibe) relativ zu einer entlang der Krümmung verlaufenden Mittellinie des gekrümmten Langlochs bei einer linearen Bewegung des Antriebsbauteils und hieraus resultierender Rotation der ersten und/oder zweiten Rotationsscheibe unverändert bleibt. Eine entsprechende Positionierung und ein entsprechender Verlauf der Krümmung sind für den Fachmann unter Anwendung seines Fachwissens und unter Kenntnis der Abmessungen und relativen Anordnungen der relevanten Elemente des Funktionsmoduls für eine gegebene Ausführungsform (insbesondere Dimensionierung des Antriebsbauteils mit Bewegungsumfang der Linearbewegung und relativer Positionierung sowie geometrischer Ausgestaltung der Anschlussstellen, relative Position des Antriebsbauteils zu der Rotationsachse sowie Ausgestaltung und Abstand der Rotationsanschlussstellen zu der Rotationsachse) geometrisch bestimmbar. In beispielhaften Ausführungen kann als Näherung das Langloch in Form eines Kreisbogens ausgeführt sein, dessen Mittelpunkt, Bogenlänge und Radius konstruktiv herleitbar sind, insbesondere bei einer Begrenzung des Drehwinkels der Rotationsscheiben. In weiteren, alternativen Ausführungen kann vorgesehen sein, für den Verlauf des Langlochs eine numerisch bestimmte Bahn (gemäß einer mathematischen Funktion) oder einen Parameterabhängig bestimmten Spline anzugeben. Das gekrümmte Langloch kann hierbei insbesondere in Umfangsrichtung eine Relativbewegung zwischen der betreffenden Rotationsscheibe und einem in bzw. durch das gekrümmte Langloch greifenden Übertragungs- bzw. Verbindungselement, insbesondere einem stiftförmigen Verbindungselement, zulassen, sodass eine Bewegung der betreffenden Anschlussstelle in Längsrichtung keine Rotation der Rotationsscheibe bewirkt. Hierbei kann das gekrümmte Langloch (mit seinen Seitenwänden) einen Anschlag in Radialrichtung der betreffenden Rotationsscheibe bilden, so dass ein in das Langloch greifendes Übertragungs- bzw. Verbindungselement, insbesondere ein stiftförmiges Verbindungselement, in Radialrichtung gestützt wird. Hierdurch kann eine Stabilität des Funktionsmoduls verbessert sein.

In einer Ausgestaltung sind die erste Rotationsscheibe und die zweite Rotationsscheibe baugleich mit einer als in radialer Richtung verlaufendem Langloch gebildeten Rotationsanschlussstelle und einer als gekrümmtem Langloch gebildeten Aussparung ausgebildet und in dem Funktionsmodul derart angeordnet, dass die erste Rotationsanschlussstelle mit der ersten Anschlussstelle derart verbunden ist, dass die oszillierende Linearbewegung der ersten Anschlussstelle auf die erste Rotationsanschlussstelle übertragen wird, die erste Aussparung im Bereich der zweiten Anschlussstelle derart angeordnet ist, dass die oszillierende Linearbewegung der zweiten Anschlussstelle nicht auf die erste Rotationsscheibe übertragen wird, die zweite Rotationsanschlussstelle mit der zweiten Anschlussstelle derart verbunden ist, dass die oszillierende Linearbewegung der zweiten Anschlussstelle auf die zweite Rotationsanschlussstelle übertragen wird, und die zweite Aussparung im Bereich der ersten Anschlussstelle derart angeordnet ist, dass die oszillierende Linearbewegung der ersten Anschlussstelle nicht auf die zweite Rotationsscheibe übertragen wird. Insbesondere können die baugleich ausgebildeten Rotationsscheiben hierzu um 180° verdreht zueinander in dem Funktionsmodul angeordnet sein.

Die erste Rotationsscheibe und die zweite Rotationsscheibe können in Richtung der Rotationsachse auf gegenüberliegenden Seiten des Antriebsbauteils angeordnet sein. Somit kann insbesondere eine Anordnung bereitgestellt sein, in der gegenläufig oszillierende Rotationsscheiben beidseitig einer in der Längsrichtung verlaufenden Mittelachse des Funktionsmoduls angeordnet sind.

In alternativen Ausgestaltungen können die erste Rotationsscheibe und die zweite Rotationsscheibe in Richtung der Rotationsachse auf derselben Seite des Antriebsbauteils angeordnet sein. Beispielsweise kann hierbei eine der Rotationsscheiben, zum Beispiel die erste Rotationsscheibe, kreisringförmig gebildet sein und die andere der Rotationsscheiben, in dem gennannten Beispiel die zweite Rotationsscheibe, kann kreisförmig gebildet und innerhalb des mit der einen Rotationsscheibe (im Beispiel die erste Rotationsscheibe) gebildeten Kreisrings angeordnet sein. In einer solchen Ausgestaltung sind somit zwei gegenläufig-rotatorisch ineinander oszillierende Rotationsscheiben bereitgestellt.

In alternativen Ausgestaltungen kann vorgesehen sein, dass das Antriebsbauteil eingerichtet ist, über die Antriebsschnittstelle entsprechend einer oszillierenden rotierenden Antriebsbewegung um die in diesem Fall zu der Längsrichtung des Funktionsmoduls parallelen (oder hierauf liegenden) Rotationsachse angetrieben zu werden, derart, dass sich das Antriebsbauteil oszillierend rotierend um die Rotationsachse bewegt. Beispielsweise können hierbei die Rotationsscheiben mit einer Innenverzahnung gebildet sein, wobei dann an dem Antriebsbauteil ein Antriebszahnrad gebildeten ist und eine erste oszillierende Rotation dadurch erreicht ist, dass die betreffende Rotationsscheibe mit ihrer Innenverzahnung auf das Antriebszahnrad aufgesetzt ist und durch dieses gleichsinnig angetrieben wird, und eine zu der ersten oszillierenden Rotation gegenläufige zweite oszillierende Rotation erreicht ist, dass die betreffende Rotationsscheibe im Sinne eines Planetengetriebes über wenigstens ein jeweiliges Planetenzahnrad von dem Antriebszahnrad und zu diesem gegenläufig angetrieben wird.

Die erste Rotationsscheibe und/oder die zweite Rotationsscheibe kann/können auf ihrer Umfangsseite und/oder auf einer oder beiden Stirnseiten Funktionselemente aufweisen, welche die oszillierende Rotation ausführen und eingerichtet sind, mittels der oszillierenden Rotation eine gewünschte Funktion des Funktionsmoduls bereitzustellen. Es sind somit Ausgestaltungen geschaffen, in denen sowohl die erste Rotationsscheibe als auch die zweite Rotationsscheibe Funktionselemente auf ihren Umfangsflächen aufweisen. Weiterhin sind Ausgestaltungen geschaffen, in denen sowohl die erste Rotationsscheibe als auch die zweite Rotationsscheibe Funktionselemente auf einer ihrer Stirnflächen bzw. -seiten aufweisen. Auch sind Ausgestaltungen von der Offenbarung umfasst, in denen sowohl die erste Rotationsscheibe als auch die zweite Rotationsscheibe Funktionselemente sowohl auf ihren Umfangsflächen als auch auf einer ihrer Stirnflächen aufweisen. Ebenfalls offenbart sind Ausgestaltungen, in denen eine der Rotationsscheiben sowohl auf ihrer Umfangsfläche als auch auf einer ihrer Stirnflächen Funktionselemente aufweist und die andere der Rotationsscheiben (nur) auf ihrer Umfangsfläche oder auf einer ihrer Stirnflächen Funktionselemente aufweist, sowie solche Ausgestaltungen, in denen eine der Rotationsscheiben (nur) auf ihrer Umfangsfläche Funktionselemente aufweist und die andere der Rotationsscheiben (nur) auf einer ihrer Stirnflächen Funktionselemente aufweist.

Die Funktionselemente können die betreffende Fläche (Umfangsfläche bzw. Stirnfläche) einer Rotationsscheibe vollständig oder teilweise bedecken. Beispielsweise können Funktionselemente auf einer Umfangsfläche einer Rotationsscheibe nur einen Teil des Umfangs (also beispielsweise nur einen gegebenen Winkelbereich) bedeckend angeordnet sein. Die Bedeckung der betreffenden Fläche kann entsprechend der gewählten Funktionalität, wie nachfolgend im Einzelnen erläutert, sinnvoll gewählt sein, beispielsweise so, dass Funktionselemente in eine oder mehrere gewünschte Richtungen zeigen.

Die Funktionselemente können aus einem oder mehreren der folgenden Gruppe gewählt sein: Borsten, abrasive Vorsprünge, massierende Vorsprünge, Schleifelemente, Schneidelemente. Hierbei entspricht die Wahl der Funktionselemente einer gewünschten Funktion eines das Funktionsmodul umfassenden Handgeräts. So können mit Borsten als Funktionselemente als Bürstenaufsätze ausgestaltete Funktionsmodule aufgebaut werden, die für Bürsten-Handgeräte nutzbar sind. Hierbei sind, je nach Wahl der Borsten und deren Anordnung, Bürsten für verschiedene Anwendungen realisierbar, z.B. Zahnbürsten, Hautbürsten, Schuhbürsten, Haushaltsreinigungsbürsten usw. Abrasive Vorsprünge und/oder Schleifelemente können beispielsweise für Hautbehandlungen (z.B. Dermabrasion) oder Werkzeuganwendungen (z.B. Schleifgeräte) eingesetzt werden. Auch Schneidelemente können im Zusammenhang mit Hautbehandlungen (z.B. Hornhautentfernung) oder Werkzeuganwendungen zum Einsatz kommen. Massierende Vorsprünge sind beispielsweise für die Durchblutungsförderung und/oder sexuelle Stimulation einsetzbar.

Funktionselemente können als (kleine bis kleinste) Schleifpartikel, raue, spitze und/oder schneidende Strukturen, harte oder weiche Borsten, oder sanfte und stimulierende Strukturen, wie Noppen, Wellen oder Stimulationsflips ähnlich einer Fächerscheibe ausgestaltet sein. Hierbei können die Funktionselemente auf die entsprechende Fläche der betreffenden Rotationsscheibe aufgebracht und dort befestigt sein, zum Beispiel durch Kleben, Schweißen, Umformung, Einschrauben und/oder Einclipsen, oder können einstückig mit der betreffenden Rotationsscheibe gebildet sein, zum Beispiel angeformt, etwa durch ein Spritzgussverfahren. Funktionselemente können als eine Kombination von Strukturen gebildet sein, beispielsweise als Vorsprünge mit hierauf angeordneten Schleif- und/oder Schneidelemente und/oder mit hierauf angeordneten weiteren Vorsprüngen, die eine gewünschte Funktionalität bereitstellen.

Insbesondere für Anwendungen zur Interaktion mit menschlicher Haut können die Funktionselemente ausgestaltet sein, um ein Einklemmen sich wölbender Haut zu minimieren oder vollständig zu vermeiden. Beispielsweise können abrasive und/oder schneidende Funktionselemente mit gerundeten prismatischen Strukturen mit scharfer Deckflächenkante gebildet sein.

In spezifischen Ausgestaltungen können die Rotationsscheiben unterschiedliche Funktionselemente aufweisen. Alternativ oder zusätzlich können unterschiedliche Abschnitte derselben Rotationsscheibe unterschiedliche Funktionselemente aufweisen. Hierbei können sich die Funktionselemente in ihrem Typ unterscheiden und/oder können von demselben Typ, jedoch mit unterschiedlicher Ausgestaltung (Borstenlänge, Partikelgröße, ...) sein. Beispielsweise können mit unterschiedlichen Funktionselementen auf unterschiedlichen Rotationsscheiben Multifunktions-Funktionsmodule gebildet sein. Mit unterschiedlich ausgestalteten Funktionselementen desselben Typs kann beispielsweise eine Belastung in der Mitte des Funktionsmoduls "konzentriert" werden (beispielsweise durch längere Funktionselemente innen im Vergleich zu außen), eine Wirkung kann gestuft werden (beispielsweise durch zentral weiche, außen harte Funktionselemente oder umgekehrt) oder eine äußere Form des Funktionsmoduls kann für eine gegebene Anwendung günstig gestaltet werden.

Insbesondere kann bei vorteilhaften Ausgestaltungen eine Kombination von Anordnung der Rotationsscheiben (auf derselben Seite oder auf gegenüberliegenden Seiten des Antriebsbauteils wie vorangehend ausgeführt), Auswahl der Funktionselemente sowie Anordnung der Funktionselemente auf Flächen der Rotationsscheiben (Umfangsfläche oder Stirnseite, vollflächig oder teilweise, jeweils wie vorangehend erläutert) im Lichte einer gegebenen Anwendung aufeinander abgestimmt sein.

In einer beispielhaften Ausgestaltung können die erste Rotationsscheibe und die zweite Rotationsscheibe in Richtung der Rotationsachse auf derselben Seite des Antriebsbauteils angeordnet sein, wobei die erste Rotationsscheibe kreisringförmig gebildet ist und die zweite Rotationsscheibe kreisförmig gebildet und innerhalb des mit der ersten Rotationsscheibe gebildeten Kreisrings angeordnet ist. In diesem Beispiel sind dann Funktionselemente vollflächig auf den von dem Antriebsbauteil abgewandten Stirnseiten der Rotationsscheiben angeordnet. Eine solche Ausgestaltung kann zum Beispiel bei Borsten als Funktionselementen vorteilhaft als Zahnbürstenaufsatz dienen, bei abrasiven Vorsprüngen als Hautbehandlungsaufsatz oder bei massierenden Vorsprüngen als sexueller Stimulationsaufsatz zur Auflage auf eine erogene Zone.

Die erste Anschlussstelle und die zweite Anschlussstelle können entlang der Querrichtung mit gleichem Abstand zu der Rotationsachse angeordnet sein. In solchen Ausgestaltungen ergibt sich für den Antrieb der jeweiligen Rotation der ersten Rotationsscheibe und der zweiten Rotationsscheibe ein gleich großer Hebelarm um die Rotationsachse. Sind gleichzeitig die erste Anschlussstelle und die zweite Anschlussstelle, sowie auch die erste Rotationsanschlussstelle und die zweite Rotationsanschlussstelle, ohne einen Abstand in der Längsrichtung voneinander angeordnet, wie dies in beispielhaften Ausgestaltungen vorgesehen ist, folgt eine gleiche Winkelgeschwindigkeit für die jeweilige Rotation der ersten Rotationsscheibe und der zweiten Rotationsscheibe. In alternativen Ausgestaltungen können die erste Anschlussstelle und die zweite Anschlussstelle entlang der Querrichtung mit unterschiedlichem Abstand zu der Rotationsachse angeordnet sein. Hierdurch können unterschiedliche Rotationsgeschwindigkeiten für die erste Rotationsscheibe und die zweite Rotationsscheibe erreicht sein. Bei Rotationsscheiben mit unterschiedlichem Durchmesser kann durch eine Anordnung der ersten Anschlussstelle und der zweiten Anschlussstelle entlang der Querrichtung mit unterschiedlichem Abstand zu der Rotationsachse eine gleiche Umfangsgeschwindigkeit für die jeweilige Rotation der ersten Rotationsscheibe und der zweiten Rotationsscheibe erreicht sein, beispielsweise bei ineinander angeordneten Rotationsscheiben auf derselben Seite des Antriebsbauteils. Allgemein kann durch die Wahl der Abstände der Anschlussstellen und/oder Rotationsanschlussstellen in der Querrichtung zu der Rotationsachse die Rotationsgeschwindigkeiten der Rotationsscheiben für eine gegebene Anwendung vorteilhaft eingestellt und/oder zueinander abgestimmt werden.

Das Funktionsmodul kann eine dritte Rotationsscheibe und eine vierte Rotationsscheibe aufweisen, wobei die dritte Rotationsscheibe um die Rotationsachse rotierbar angeordnet und eingerichtet ist, eine durch die oszillierende Bewegung des Antriebsbauteils angetriebene dritte oszillierende Rotation um die Rotationsachse auszuführen, wobei die dritte oszillierende Rotation gleichläufig zu der ersten oszillierenden Rotation ist. Die vierte Rotationsscheibe ist um die Rotationsachse rotierbar angeordnet und eingerichtet, eine durch die oszillierende Bewegung des Antriebsbauteils angetriebene vierte oszillierende Rotation der vierten Rotationsscheibe um die Rotationsachse auszuführen, wobei die vierte oszillierende Rotation gegenläufig zu der ersten oszillierenden Rotation ist.

Die dritte Rotationsscheibe kann Folgendes aufweisen: eine dritte Rotationsanschlussstelle, welche mit der ersten Anschlussstelle derart verbunden ist, dass die oszillierende Linearbewegung der ersten Anschlussstelle auf die dritte Rotationsanschlussstelle übertragen wird, um eine dritte oszillierende Rotation der dritten Rotationsscheibe um die Rotationsachse zu bewirken, wobei die dritte oszillierende Rotation gleichläufig zu der ersten oszillierenden Rotation ist, und optional, insbesondere in Ausgestaltungen, in denen die erste Rotationsscheibe eine erste Aussparung aufweist, eine dritte Aussparung, welche im Bereich der zweiten Anschlussstelle derart angeordnet ist, dass die oszillierende Linearbewegung der zweiten Anschlussstelle nicht auf die dritte Rotationsscheibe übertragen wird. Die vierte Rotationsscheibe kann Folgendes aufweisen: eine vierte Rotationsanschlussstelle, welche mit der zweiten Anschlussstelle derart verbunden ist, dass die oszillierende Linearbewegung der zweiten Anschlussstelle auf die vierte Rotationsanschlussstelle übertragen wird, um eine vierte oszillierende Rotation der vierten Rotationsscheibe um die Rotationsachse zu bewirken, wobei die vierte oszillierende Rotation gegenläufig zu der ersten oszillierenden Rotation ist, und optional, insbesondere in Ausgestaltungen, in denen die zweite Rotationsscheibe eine zweite Aussparung aufweist, eine vierte Aussparung, welche im Bereich der ersten Anschlussstelle derart angeordnet ist, dass die oszillierende Linearbewegung der ersten Anschlussstelle nicht auf die vierte Rotationsscheibe übertragen wird.

In alternativen Ausgestaltungen kann nur eine dritte Rotationsscheibe oder nur eine vierte Rotationsscheibe vorgesehen sein, oder das Funktionsmodul kann mehr als vier Rotationsscheiben aufweisen. Allgemein kann eine beliebige Anzahl an Rotationsscheiben vorgesehen sein, welche entsprechend einer gegebenen Anwendung des Funktionsmoduls gewählt und angeordnet sind. Beispielsweise können mehr als zwei Rotationsscheiben beidseitig des Antriebsbauteils, insbesondere in gleicher Anzahl je Seite, verteilt und derart eingerichtet und angeordnet sein, dass nebeneinanderliegende Rotationsscheiben bei Antrieb gegenläufig oszillieren.

Zusätzlich zu Rotationsscheiben können eine oder mehrere stillstehende Scheiben vorgesehen sein. Beispielsweise kann eine stillstehende Scheibe das Antriebsbauteil zumindest an einem distalen Ende umgebend angeordnet sein. Alternativ hierzu oder zusätzlich können stillstehende Scheiben zwischen Rotationsscheiben und diese separierend vorgesehen sein. Stillstehende Scheiben können Funktionselemente aufweisen, welche beispielsweise auf den Rotationsscheiben vorgesehenen Funktionselementen entsprechen und im Zusammenspiel mit der Bewegung der Funktionselemente auf den Rotationsscheiben auch im Stillstand eine gewünschte Wirkung entfalten können.

Im Falle einer stillstehenden Scheibe im Bereich des distalen Endes des Antriebsbauteils kann eine solche stillstehende Scheibe als Mittelscheibe bezeichnet werden.

Es kann vorgesehen sein, dass diejenigen beiden Rotationsscheiben, die beidseitig direkt neben der Mittelscheibe angeordnet sind, gegenläufig oszillierend rotieren. In diesem Fall kann insbesondere die erste Rotationsscheibe in Richtung der Rotationsachse auf einer Seite des Antriebsbauteils und somit auf einer Seite der Mittelscheibe und direkt an diese angrenzend angeordnet sein, und die zweite Rotationsscheibe kann in Richtung der Rotationsachse auf der gegenüberliegenden Seite des Antriebsbauteils und somit auf der anderen Seite der Mittelscheibe und direkt an diese angrenzend angeordnet sein.

In alternativen Ausgestaltungen kann vorgesehen sein, dass diejenigen beiden Rotationsscheiben, die beidseitig direkt neben der Mittelscheibe angeordnet sind, gleichläufig oszillierend rotieren. In diesem Fall sind die erste Rotationsscheibe und die zweite Rotationsscheibe in Richtung der Rotationsachse auf derselben Seite des Antriebsbauteils und somit aufeinanderfolgen auf derselben Seite der Mittelscheibe angeordnet. Hierbei können dann insbesondere eine dritte und vierte Rotationsscheibe auf der gegenüberliegenden Seite des Antriebsbauteils und somit auf der anderen Seite der Mittelscheibe angeordnet sein, wobei dann insbesondere die erste Rotationsscheibe auf einer Seite der Mittelscheibe und direkt an diese angrenzend und die dritte Rotationsscheibe auf der anderen Seite der Mittelscheibe und direkt an diese angrenzend angeordnet sein kann. Im Falle von mehr als vier Rotationsscheiben können dann in beiden Richtungen von der Mittelscheibe weg die Rotationsscheiben abwechselnd gegenläufig oszillierend-rotierend angeordnet sein.

Insbesondere in Ausgestaltungen mit mehr als zwei Rotationsscheiben kann vorgesehen sein, dass Rotationsscheiben, die in Querrichtung auf einer Seite des Antriebsbauteils angeordnet sind, untereinander gleichartige Funktionselemente aufweisen, und Rotationsscheiben, die in Querrichtung auf der anderen Seite des Antriebsbauteils angeordnet sind, untereinander gleichartige, jedoch von den Funktionselementen der Rotationsscheiben auf der einen Seite unterschiedliche Funktionselemente aufweisen. Alternativ kann vorgesehen sein, dass zwei Arten von Funktionselementen über die Gesamtheit der Rotationsscheiben alternierend vorgesehen sind.

Rotationsscheiben des Funktionsmoduls können mit gleicher oder unterschiedlicher Breite (Stärke) gebildet sein, um eine für eine gegeben Anwendung vorteilhafte Wirkungsweise zu erreichen. Beispielsweise können Rotationsscheiben mit zwei unterschiedlichen Breiten vorgesehen sein, welche über die Gesamtheit der Rotationsscheiben alternierend angeordnet sind.

Das Funktionsmodul kann ein Gehäuse aufweisen, wobei dann das Antriebsbauteil in dem Gehäuse angeordnet ist, die Rotationsscheiben wenigstens teilweise in dem Gehäuse angeordnet sind, und das Gehäuse mit einem Antriebsmodul verbindbar ist, derart, dass eine von dem Antriebsmodul bereitgestellte oszillierende lineare Antriebsbewegung das Antriebsbauteil antreibt.

Beispielsweise kann das Funktionsmodul mit einem Antriebsmodul verbindbar sein, welches ein antriebsmodulseitiges Antriebsbauteil aufweisen, welches mit dem Antriebsbauteil des Funktionsmodul funktional verbindbar ist. Beispielsweise können die Antriebsbauteile mittels einer Kopplung verbindbar sein, welche an dem Antriebsbauteil des Funktionsmoduls, dem antriebsmodulseitigen Antriebsbauteil oder teilweise an dem Antriebsbauteil des Funktionsmoduls und teilweise an dem antriebsmodulseitigen Antriebsbauteil gebildet ist. Hierbei ist dann über die Kopplung eine Übertragung der Antriebsbewegung von dem Antriebsmodul auf das Funktionsmodul ermöglicht. Das Antriebsmodul stellt die oszillierende lineare Antriebsbewegung mittels eines Antriebs bereit. Der Antrieb kann ein Lineardirektantrieb sein, beispielsweise ein Linearmotor, oder kann mit einem Motor, der eine nicht-lineare Antriebsbewegung bereitstellt, und einem Getriebe gebildet sein, welches die nicht-lineare Antriebsbewegung in die oszillierende lineare Antriebsbewegung umwandelt. Beispielsweise kann ein (rotierender) Elektromotor vorgesehen sein, dessen Rotationsbewegung mittels eines entsprechenden Getriebes, beispielsweise einen Kurbeltrieb umfassend, in die oszillierende lineare Antriebsbewegung umgewandelt wird.

In einer bevorzugten Ausgestaltung ist eine Magnetkopplung vorgesehen, bei der das Antriebsbauteil des Funktionsmoduls oder das antriebsmodulseitige Antriebsbauteil einen Magneten aufweist und zumindest ein dem betreffenden Antriebsbauteil zugewandtes Ende des anderen Antriebsbauteils aus einem Material besteht, welches von dem Magneten angezogen wird, insbesondere aus einem ferromagnetischen Material. Alternativ können beide Antriebsbauteile Magnete aufweisen, welche derart ausgerichtet sind, dass sie bei einer Anordnung des Funktionsmoduls an dem Antriebsmodul einander derart anziehen, dass die gewünschte Kopplung der Antriebsbauteile erfolgt.

Alternativ zu einer magnetischen Kopplung kann eine andere Kopplung vorgesehen sein, beispielsweise eine mechanische Kopplung. Eine mechanische Kopplung kann durch miteinander verrastende, verschraubende oder anderweitig miteinander mechanisch verbindbare Bauteile oder Elemente der Antriebsbauteile gebildet sein.

Als Alternative zu einer Kopplung kann vorgesehen sein, dass das antriebsmodulseitige Antriebsbauteil bei einer Vorwärtsbewegung gegen das Antriebsbauteil des Funktionsmoduls drückt und dieses in einer Vorwärtsrichtung antreibt und dass sich das antriebsmodulseitige Antriebsbauteil bei einer Rückwärtsbewegung von dem Antriebsbauteil des Funktionsmoduls in einer Rückwärtsrichtung wegbewegt und das Antriebsbauteil des Funktionsmoduls mittels einer Rückstelleinrichtung, insbesondere einer federnden Rückstelleinrichtung, beispielsweise einer Feder, dadurch in der Rückwärtsrichtung zurückbewegt wird, dass die Rückstelleinrichtung eine Rückstellkraft auf das Antriebsbauteil des Funktionsmoduls ausübt.

Das Gehäuse kann sich wenigstens teilweise um die Rotationsscheiben erstrecken. Insbesondere kann das Gehäuse die Rotationsscheiben in einem Bereich, in dem Funktionselemente angeordnet, sind freigeben und in übrigen Bereichen verdecken, um Verletzungen und/oder Beschädigung zu vermeiden. Entsprechend den vorangehend ausgeführten Ausgestaltungen mit Bezug zu der Anordnung der Rotationsscheiben und Funktionselemente kann das Gehäuse somit Stirnseiten bzw. Umfangsflächen von Rotationsscheiben vollständig oder teilweise bedecken bzw. freigeben. Hierbei kann dann entsprechend der Anordnung der Funktionselemente auch vorgesehen sein, dass für eine gegebene Rotationsscheibe andere Abschnitte bedeckt bzw. freigegeben sind als für eine andere gegebene Rotationsscheibe.

Das Gehäuse kann mit einem Antriebsmodul verbindbar sein, welches ein Antriebsmodul einer elektrischen Zahnbürste ist. Insbesondere kann das Gehäuse derart ausgestaltet sein, dass es mit einem Handstück einer als solchen bekannten und am Markt erhältlichen elektrischen Zahnbürste verbindbar ist, um ein Handgerät zu bilden. Das Handstück umfasst hierbei eine Antriebsreinrichtung und ist eingerichtet, an einen Aufsatz mit einer am Markt erhältlichen Zahnbürsteneinrichtung lösbar zu koppeln, so dass - in Ergänzung zur durch das Funktionsmodul bereitgestellten Funktion, welche eine verbesserte Zahnbürstenfunktion umfassen kann - eine als solche bekannte elektrische Zahnbürste bereitgestellt ist. Auf diese Weise kann ein Artikel bereitgestellt sein, welcher das Handstück mit der Antriebseinrichtung einer elektrischen Zahnbürste sowie ein oder mehrere offenbarungsgemäße Funktionsmodule sowie gegebenenfalls ein vorbekanntes Bürsten(wechsel)modul mit einer Bürsteneinrichtung umfasst, die jeweils an das Handstück mit der Antriebseinrichtung lösbar gekoppelt werden können, derart, dass die von der Antriebseinrichtung bereitgestellte Antriebskraft oder -bewegung auf das jeweils angekoppelte Modul eingekoppelt werden kann.

Bezüglich der Verbindung des Gehäuses mit dem Antriebsmodul einer elektrischen Zahnbürste können die oben mit Bezug zu Verbindung des Gehäuses mit einem (allgemeinen) Antriebsmodul ausgeführten Ausgestaltungen entsprechend vorgesehen sein. Beispielsweise kann ein Verbindungsmechanismus (und ein entsprechendes Handstück einer Zahnbürste) gemäß der Offenbarung in dem Dokument WO 2019/005603 A1 vorgesehen sein. Alternativ kann ein Antriebsmodul einer elektrischen Zahnbürste vorgesehen sein, welches in bekannter Weise eine oszillierende rotatorische Antriebsbewegung bereitstellt.

Für das offenbarungsgemäße Handgerät können die vorangehend mit Bezug zu dem Funktionsmodul erläuterten Ausgestaltungen entsprechend vorgesehen sein. Insbesondere können auch die im Zusammenhang mit der Verbindbarkeit eines Gehäuses des Funktionsmoduls mit einem Antriebsmodul erläuterten Ausgestaltungen für ein Antriebsmodul, insbesondere auch mit Bezug auf ein Handstück einer elektrischen Zahnbürste, für das Antriebsmodul des Handgeräts vorgesehen sein.

Bei dem Handgerät ist das Funktionsmodul in einer bevorzugten Ausführung lösbar mit dem Antriebsmodul verbunden. Hierbei kann das Handgerät gemäß einem Baukastensystem mit unterschiedlichen Funktionsmodulen verbindbar sein, um Handgeräte mit unterschiedlicher Funktionalität bereitzustellen. Es kann somit, wie vorangehend mit Bezug auf unterschiedliche Ausführungen im Einzelnen erläutert, ein Artikel bereitgestellt sein, welcher ein Antriebsmodul (beispielsweise ein Handstück einer elektrischen Zahnbürste) mit einer Antriebseinrichtung sowie ein oder mehrere offenbarungsgemäße Funktionsmodule - sowie gegebenenfalls weitere nicht-offenbarungsgemäße Funktionsmodule, beispielsweise ein vorbekanntes Bürsten(wechsel)modul - umfasst, die jeweils an das Antriebsmodul mit der Antriebseinrichtung lösbar gekoppelt werden können, derart, dass die von der Antriebseinrichtung bereitgestellte Antriebskraft oder -bewegung auf das jeweils angekoppelte Modul eingekoppelt werden kann.

Alternativ kann das Funktionsmodul unlösbar mit dem Antriebsmodul verbunden sein. Insbesondere kann es somit ermöglicht sein, ein besonderes kompaktes, stabiles und/oder effizientes Handgerät mit festgelegter Funktion bereitzustellen.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine Teilansicht eines Funktionsmoduls zum Bereitstellen gegenläufig oszillierender Bewegungen für ein Handgerät;
- Fig. 2: eine weitere Teilansicht des Funktionsmoduls aus Fig. 1;
- Fig. 3: noch eine weitere Teilansicht des Funktionsmoduls aus Fig. 1;
- Fig. 4A und 4B: Teilansichten eines Funktionsmoduls in verschiedenen Funktionsphasen;
- Fig. 5A und 5B: alternative Teilansichten des Funktionsmoduls in verschiedenen Funktionsphasen;
- Fig. 6A und 6B: Teilansichten eines Funktionsmoduls mit stillstehender Scheibe in verschiedenen Funktionsphasen;
- Fig. 7: eine Schnittansicht eines Funktionsmoduls;
- Fig. 8: eine weitere Schnittansicht eines Funktionsmoduls;
- Fig. 9: eine schematische Darstellung eines Funktionsmoduls zum Bereitstellen gegenläufig oszillierender Bewegungen für ein Handgerät;
- Fig. 10: eine schematische Darstellung eines weiteren Funktionsmoduls zum Bereitstellen gegenläufig oszillierender Bewegungen für ein Handgerät;
- Fig. 11: eine schematische Darstellung eines Handgeräts mit dem Funktionsmodul aus Fig. 10;
- Fig. 12A bis 12D: schematische Ansichten noch eines weiteren Funktionsmoduls zum Bereitstellen gegenläufig oszillierender Bewegungen für ein Handgerät;
- Fig. 13A bis 13D: schematische Ansichten eines Zahnbürsten-Funktionsmoduls;
- Fig. 14A und 14B: schematische Ansichten eines weiteren Zahnbürsten-Funktionsmoduls;
- Fig. 15A bis 15C: schematische Ansichten noch eines weiteren Zahnbürsten-Funktionsmoduls;
- Fig. 16A bis 16D: schematische Ansichten eines Zahnbürsten-Funktionsmoduls mit alternativer Bürstenfunktion;
- Fig. 17A und 17B: Ansichten alternativer Ausgestaltungen des Zahnbürsten-Funktionsmoduls aus Fig. 16;
- Fig. 18: eine Schnittansicht eines noch weiteren Funktionsmoduls an einem Handgerät mit rotatorisch-oszillierender Antriebsbewegung; und
- Fig. 19A bis 19C: schematische Ansichten eines anderen Funktionsmoduls zum Bereitstellen gegenläufig oszillierender Bewegungen für ein Handgerät.

Zum besseren Verständnis sind in der nachfolgenden Beschreibung von Ausführungsbeispielen in den verschiedenen Ausführungen einander entsprechende Elemente mit gleichen Bezugszeichen gekennzeichnet.

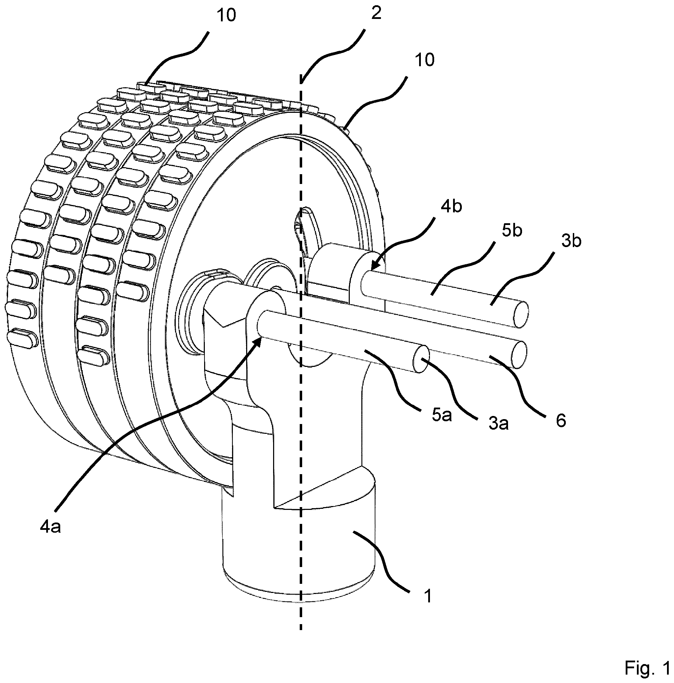

Die Fig. 1 zeigt eine Teilansicht eines Funktionsmoduls zum Bereitstellen gegenläufig oszillierender Bewegungen für ein Handgerät. Insbesondere ist ein Antriebsbauteil 1 zu erkennen, welches für eine Bewegung 2 entlang einer Längsrichtung des Funktionsmoduls eingerichtet ist. Das Antriebsbauteil ist gabelförmig gebildet und ist mit einer ersten Anschlussstelle 3a und einer zweiten Anschlussstelle 3b versehen. Hierbei sind die Anschlussstellen 3a, 3b jeweils mit einem Loch 4a, 4b in gabelförmigen Ausformungen des Antriebsbauteils 1 und in dem jeweiligen Loch angeordneten jeweiligen Stiften 5a, 5b gebildet. Die gabelförmigen Ausformungen des Antriebsbauteils 1 erstrecken sich hierbei auf gegenüberliegenden Seiten einer Rotationsachse 6 des Funktionsmoduls um die Rotationsachse 6 herum. Die Rotationsachse 6 ist senkrecht zu der Längsrichtung 2 des Funktionsmoduls verlaufend angeordnet. Somit sind die erste Anschlussstelle 3a und die zweite Anschlussstelle 3b auf gegenüberliegenden Seiten der Rotationsachse 6 angeordnet, wobei die Anschlussstellen 3a, 3b, je nach Bewegung der Antriebsbauteils 1 in Längsrichtung über, unter oder auf derselben Höhe wie die Rotationsachse 6 angeordnet sein können.

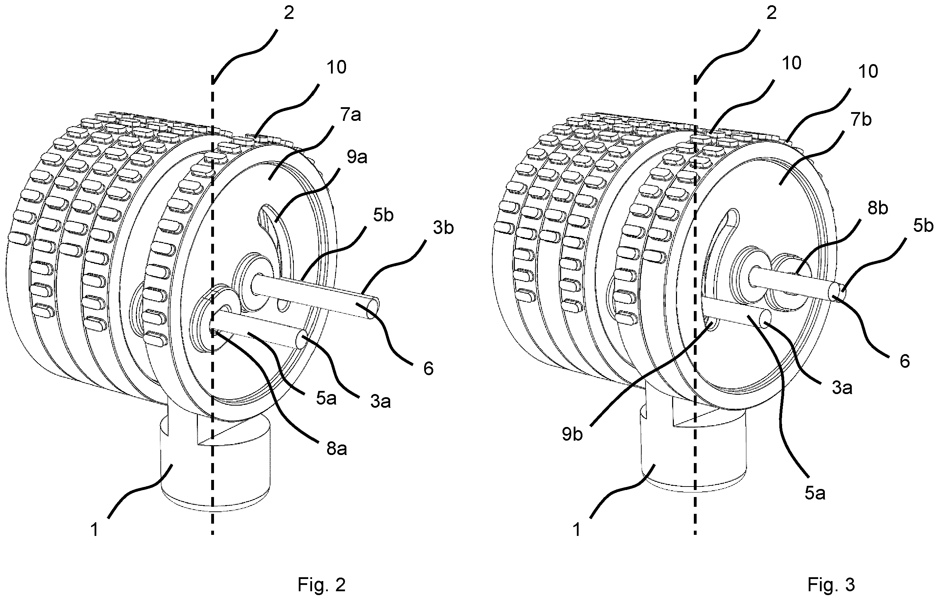

Die Fig. 2 zeigt eine Teilansicht einer weiteren Aufbaustufe des Funktionsmoduls aus Fig. 1. Auf der Rotationsachse 6 und um diese rotierbar ist eine erste Rotationsscheibe 7a angeordnet. Die erste Rotationsscheibe 7a hat eine kreisförmige Grundfläche mit einer Mittelbohrung, die auf der Rotationsachse 6 angeordnet ist.

Die erste Rotationsscheibe 7a weist eine erste Rotationsanschlussstelle 8a auf, welche als Langloch mit Erstreckung in Radialrichtung der ersten Rotationsscheibe 7a ausgebildet ist. Die Breite des Langlochs entspricht hierbei dem Durchmesser des Stifts 5a der ersten Anschlussstelle 3a, so dass eine Auf- oder Abbewegung der ersten Anschlussstelle 3a entlang der Längsrichtung 2 eine Rotation der ersten Rotationsscheibe 7a um die Rotationsachse 6 bewirkt, da der Stift 5a eine die Längsbewegung verursachende Antriebskraft über eine der Seitenwände des Langlochs der ersten Rotationsanschlussstelle 8a auf die Rotationsscheibe 7a überträgt und hierbei in eine Rotation wandelt. Gleichzeitig bewegt sich der Stift 5a in Längsrichtung des Langlochs (Radialrichtung der ersten Rotationsscheibe 7a) in dem Langloch. Hierdurch wird eine Änderung des Abstands in Querrichtung eines gegebenen Punkts auf der Rotationsscheibe 7a zu der Rotationsachse 6 bei einer Rotation der Rotationsscheibe 7a ausgeglichen. Dies ist notwendig, da der Abstand in Querrichtung der ersten Anschlussstelle 3a zu der Rotationsachse 6 unveränderlich ist.

Weiterhin weist die erste Rotationsscheibe 7a eine erste Aussparung 9a auf, welche als gekrümmtes Langloch ausgebildet ist. Während in der Fig. 2 erkennbar ist, dass sich das gekrümmte Langloch der ersten Aussparung 9a ungefähr in Umfangsrichtung der ersten Rotationsscheibe 7a erstreckt, verläuft das gekrümmte Langloch nicht exakt entlang der Umfangsrichtung. Vielmehr ist der Verlauf des gekrümmten Langlochs derart gewählt, dass sich der Stift 5b der zweiten Anschlussstelle 3b in der gekrümmten Längserstreckung des Langlochs in dem Langloch bei einer Rotation der ersten Rotationsscheibe 7a frei bewegen kann. Eine Abweichung von der Umfangsrichtung der ersten Rotationsscheibe 7a wird hierfür dadurch notwendig, dass bei einer Rotation der ersten Rotationsscheibe 7a auch eine diese Rotation antreibende Linearbewegung des Antriebsbauteils 1 und somit eine Linearbewegung des Stifts 5b der zweiten Anschlussstelle 3b entlang der Längsrichtung auftritt. Gleichzeitig entspricht die Breite des gekrümmten Langlochs dem Durchmesser des Stifts 5b der zweiten Anschlussstelle 3b, so dass eine Relativbewegung quer zu der Erstreckungsrichtung des gekrümmten Langlochs zwischen dem Stift 5b der zweiten Anschlussstelle 3b und der ersten Rotationsscheibe 7a verhindert ist. Hierdurch wird der Stift 5b durch die erste Rotationsscheibe 7a an der Wand des gekrümmten Langlochs gestützt und die Stabilität des Aufbaus erhöht.

Die Fig. 3 zeigt eine Teilansicht einer nächsten Aufbaustufe des Funktionsmoduls aus den Figuren 1 und 2. Auf der Rotationsachse 6 und um diese rotierbar ist eine zweite Rotationsscheibe 7b angeordnet. Die zweite Rotationsscheibe 7b ist baugleich zu der ersten Rotationsscheibe 7a ausgestaltet und um 180° rotiert zu dieser auf der Rotationsachse 6 angeordnet.

Die zweite Rotationsscheibe 7b hat also eine kreisförmige Grundfläche mit einer Mittelbohrung, die auf der Rotationsachse 6 angeordnet ist, und weist eine zweite Rotationsanschlussstelle 8b auf, welche als Langloch mit Erstreckung in Radialrichtung der zweiten Rotationsscheibe 7b ausgebildet ist. Die Breite des Langlochs entspricht hierbei dem Durchmesser des Stifts 5b der zweiten Anschlussstelle 3b, so dass eine Auf- oder Abbewegung der zweiten Anschlussstelle 3b entlang der Längsrichtung 2 eine Rotation der zweiten Rotationsscheibe 7b um die Rotationsachse 6 bewirkt, da der Stift 5b eine die Längsbewegung verursachende Antriebskraft über eine der Seitenwände des Langlochs der zweiten Rotationsanschlussstelle 8b auf die Rotationsscheibe 7b überträgt und hierbei in eine Rotation wandelt. Gleichzeitig bewegt sich der Stift 5b in Längsrichtung des Langlochs (Radialrichtung der zweiten Rotationsscheibe 7b) in dem Langloch. Hierdurch wird eine Änderung des Abstands in Querrichtung eines gegebenen Punkts auf der zweiten Rotationsscheibe 7b zu der Rotationsachse 6 bei einer Rotation der Rotationsscheibe 7b ausgeglichen. Dies ist notwendig, da der Abstand in Querrichtung der zweiten Anschlussstelle 3b zu der Rotationsachse 6 unveränderlich ist.

Weiterhin weist die zweite Rotationsscheibe 7b eine zweite Aussparung 9b auf, welche als gekrümmtes Langloch ausgebildet ist. Auch das gekrümmte Langloch der zweiten Aussparung 9b erstreckt sich ungefähr in Umfangsrichtung der zweiten Rotationsscheibe 7b, verläuft jedoch nicht exakt entlang dieser Umfangsrichtung. Vielmehr ist der Verlauf des gekrümmten Langlochs derart gewählt, dass sich der Stift 5a der ersten Anschlussstelle 3a in der gekrümmten Längserstreckung des Langlochs in dem Langloch bei einer Rotation der zweiten Rotationsscheibe 7b frei bewegen kann, wobei wiederum eine Abweichung von der Umfangsrichtung der zweiten Rotationsscheibe 7b dadurch notwendig wird, dass bei einer Rotation der zweiten Rotationsscheibe 7b auch eine diese Rotation antreibende Linearbewegung des Antriebsbauteils 1 und somit eine Linearbewegung des Stifts 5a der ersten Anschlussstelle 3a entlang der Längsrichtung auftritt. Gleichzeitig entspricht die Breite des gekrümmten Langlochs der zweiten Aussparung 9b dem Durchmesser des Stifts 5a der ersten Anschlussstelle 3a, so dass eine Relativbewegung quer zu der Erstreckungsrichtung des gekrümmten Langlochs zwischen dem Stift 5a der ersten Anschlussstelle 3a und der zweiten Rotationsscheibe 7b verhindert ist. Hierdurch wird der Stift 5a durch die zweite Rotationsscheibe 7b an der Wand des gekrümmten Langlochs gestützt und die Stabilität des Aufbaus erhöht.

Die Rotationsscheiben des Funktionsmoduls weisen auf ihrer jeweiligen Umfangsfläche Funktionselemente 10 auf, welche im Zusammenspiel mit der gegenläufigen Rotation der Rotationsscheiben eine gewünschte Funktion bereitstellen. In der dargestellten Ausführungsform der Figuren 1 bis 3 sind die Funktionselemente 10 als aus den Rotationsscheiben ausgeformte Erhebungen gebildet, welche aufgrund der Kanten an ihren Außenflächen bei einer Rotation der Rotationsscheiben eine abrasive Wirkung entfalten. Hierbei kann durch eine spezifische Formgebung die abrasive Wirkung auf eine spezielle Anwendung angepasst werden, beispielsweise eine Dermabrasion oder ein Abschleifen eines Werkstücks. In der gezeigten Ausführung bilden die Funktionselemente 10 eine prismatische Struktur ähnlich einer Passfeder, bei welcher die schmalen Enden abgerundet sind. Während durch die scharf ausgestaltete Deckflächenkanten eine abrasive Wirkung erreicht wird, verhindern bzw. mindern die Abrundungen der schmalen Enden ein Einklemmen sich wölbender Haut zwischen seitlich benachbarten Funktionselementen 10 auf gegenläufig rotierenden Rotationsscheiben.

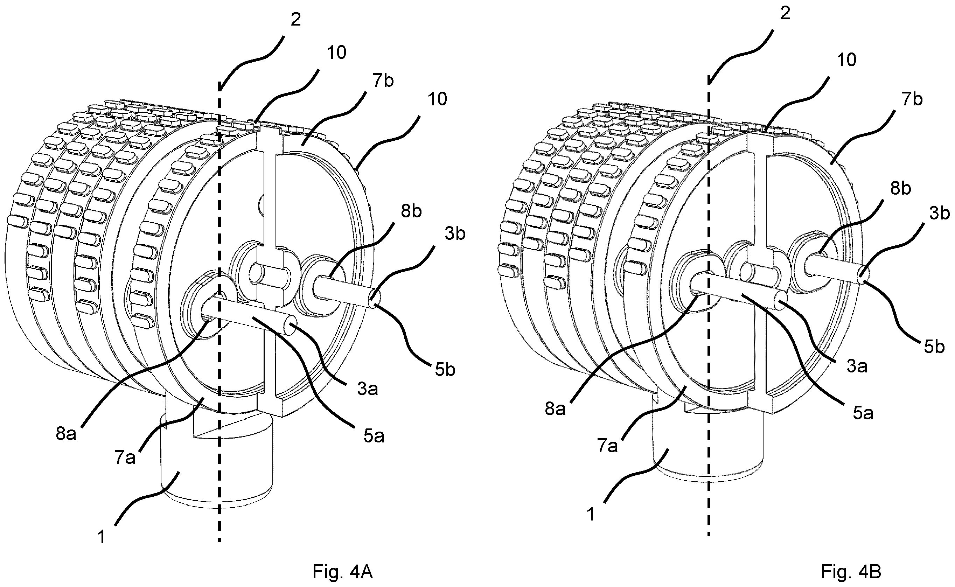

Die Figuren 4A und 4B illustrieren den Antrieb einer gegenläufig oszillierenden Rotationsbewegung der Rotationsscheiben 7a, 7b mittels des Antriebsbauteils 1. Es ist zu erkennen, wie eine Bewegung des Antriebsbauteils 1 entlang der Längsrichtung 2 (in der Darstellung der Figuren 4A und 4B handelt es sich um eine Aufwärtsbewegung), die Anschlussstellen 3a, 3b und insbesondere die Stifte 5a, 5b entlang der Längsrichtung 2 bewegt und hierdurch eine (gegenläufige) Rotation der Rotationsscheiben 7a, 7b bewirkt, indem die Rotationsanschlussstellen 8a, 8b über deren Seitenwände von den Stiften 5a, 5b bewegt werden.

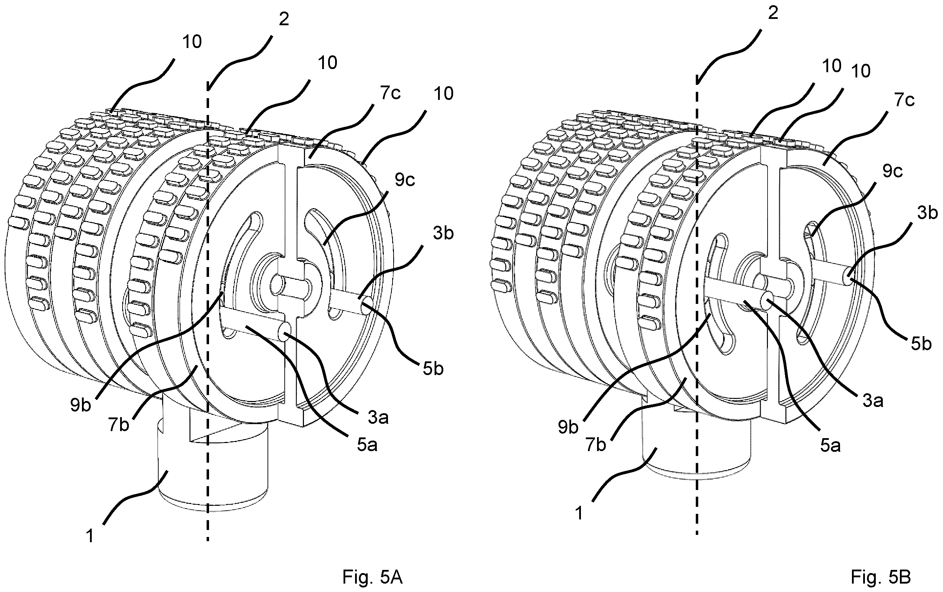

Die Figuren 5A und 5B illustrieren entsprechend, dass die zweite Rotationsscheibe 7b und eine (zu der ersten Rotationsscheibe 7a baugleich ausgestaltete und gleich orientiert wie diese angeordnete) dritte Rotationsscheibe 7c von dem jeweils nicht antreibend wirkenden Stift 5a, 5b unbeeinflusst rotieren, wenn sich das Antriebsbauteil 1 entlang der Längsrichtung 2 bewegt. Insbesondere ist die nicht-antreibende Relativbewegung der Stifte 5a, 5b in den als gekrümmte Langlöcher ausgestalteten Aussparungen 9b, 9c zwischen den Figuren 5A und 5B erkennbar.

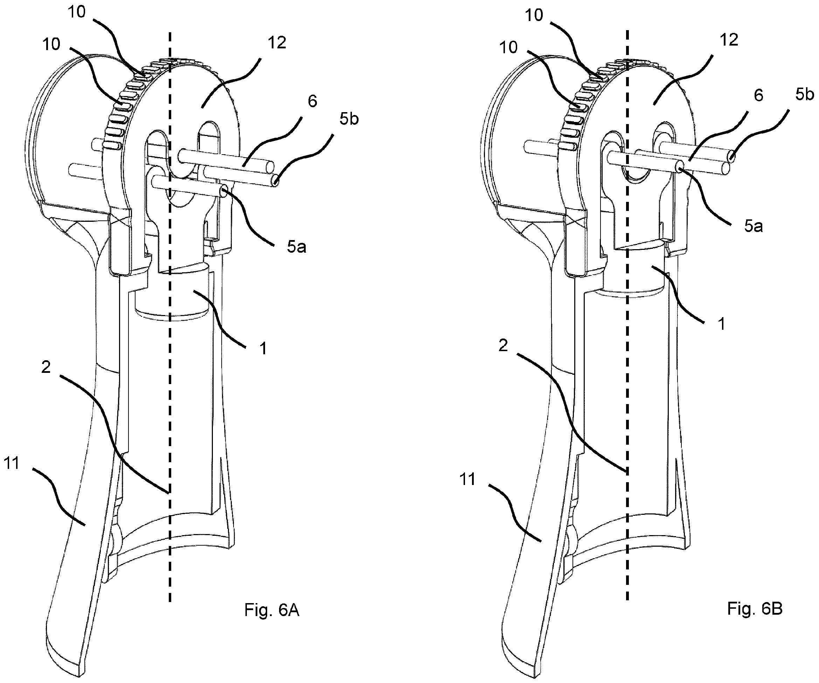

Die Figuren 6A und 6B zeigen eine Teilansicht eines Funktionsmoduls. Das Funktionsmodul weist ein Gehäuse 11 auf, in dem ein Antriebsbauteil 1 und eine Rotationsachse 6 angeordnet sind. Das Antriebsbauteil 1 an einem distalen Ende des Gehäuses 11 umgebend ist an dem Gehäuse 11 eine stillstehende Scheibe 12 mit Funktionselementen 10 angeordnet. Im Vergleich der Figuren 6A und 6B ist zu erkennen, wie sich das Antriebsbauteil 1 mit den Stiften 5a, 5b der Anschlussstellen 3a, 3b innerhalb der stillstehenden Scheibe 12 relativ zu dem Gehäuse 11 und der stillstehenden Scheibe 12 entlang der Längsrichtung 2 bewegt.

In der gezeigten Ausführung ist das Gehäuse 11, insbesondere an dessen proximalen Ende (in der Darstellung der Figuren 6A und 6B unten) entsprechend dem aus dem Dokument WO 2019/005603 A1 bekannten Verbindungsmechanismus zur Ankopplung an ein Antriebsmodul in Form eines Handteils einer elektrischen Zahnbürste ausgestaltet. In alternativen Ausgestaltungen kann eine Ankopplung an ein anders ausgestaltetes Antriebsmodul vorgesehen sein, beispielsweise ein eigens für die Verwendung mit offenbarungsgemäßen Funktionsmodulen ausgestaltetes Antriebsmodul.

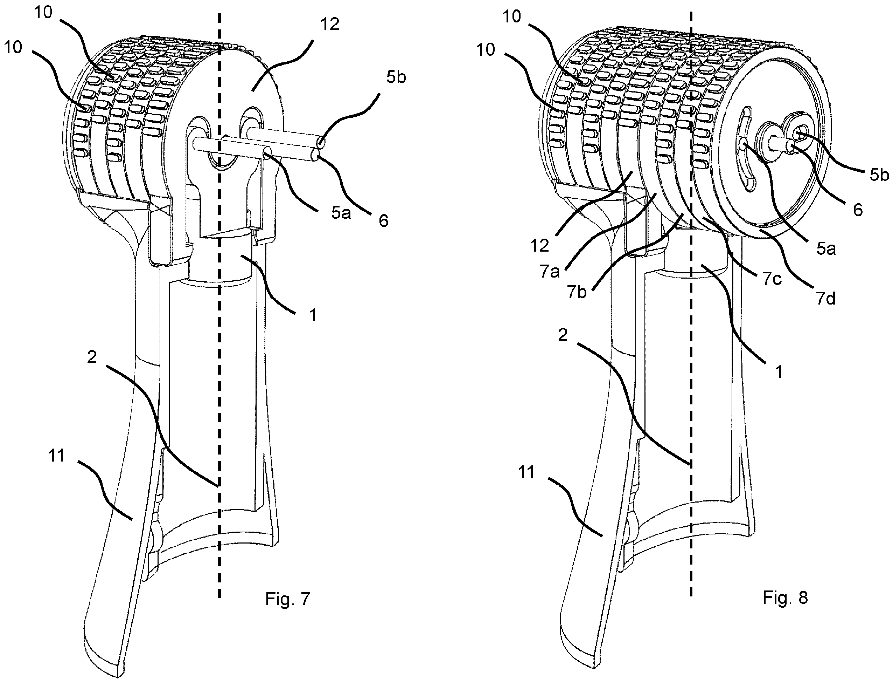

Die Figuren 7 und 8 zeigen weitere Aufbaustufen des Funktionsmoduls aus den Figuren 6A und 6B. Hierbei sind in der Fig. 7A auf einer in der Darstellung dieser Figur abgewandten Seite des Antriebsbauteils 1 und der stillstehenden Scheibe 12 Rotationsscheiben derart angeordnet, dass diese von einer oszillierenden Antriebsbewegung des Antriebsbauteils 1 entlang der Längsrichtung 2 zu einer gegenläufig-oszillierenden Rotation angetrieben werden. In der Fig. 8 sind auf der in der Darstellung dieser Figur abgewandten Seite des Antriebsbauteils 1 und der stillstehenden Scheibe 12 eine erste Rotationsscheibe 7a, eine zweite Rotationsscheibe 7b, eine dritte Rotationsscheibe 7c sowie eine vierte Rotationsscheibe 7d angeordnet. Hierbei sind die erste, zweite und dritte Rotationsscheibe 7a, 7b, 7c entsprechend den vorangehenden Erläuterungen zu den Figuren 1 bis 5 ausgestaltet und angeordnet. Die vierte Rotationsscheibe 7d ist zu der zweiten Rotationsscheibe 7b baugleich ausgestaltet und gleich orientiert wie diese angeordnet.

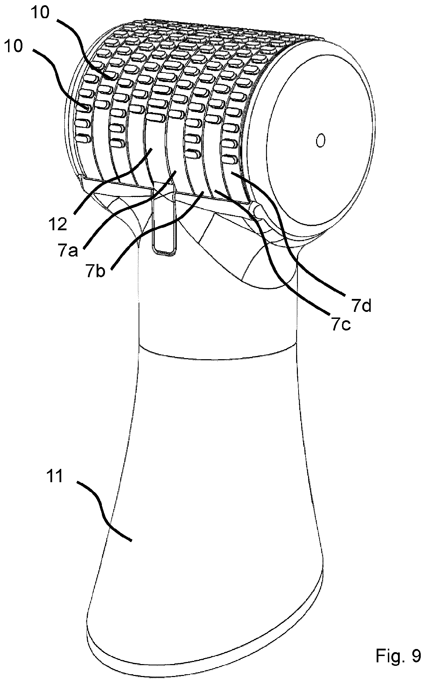

Die Fig. 9 zeigt das Funktionsmodul der Figuren 6 bis 8 in Gesamtansicht. Es ist zu erkennen, dass das Gehäuse 11 die Stirnseiten der äußersten Rotationsscheiben auf beiden Seiten der stillstehenden Scheibe 12 verdeckt. Mit dem nicht von dem Gehäuse 11 verdeckten Teil des jeweiligen Umfangs der Rotationsscheiben und der mittig angeordneten stillstehenden Scheibe 12 und den hierauf angeordnete Funktionselementen 10 ist eine Funktionsfläche gebildet. In der gezeigten Ausführung sind die erste Rotationsscheibe 7a und die direkt anschließend auf der anderen Seite der stillstehenden Scheibe 12 angeordnete Rotationsscheibe derart ausgestaltet und angeordnet, dass diese gleichlaufend oszillierend rotieren. Durch die Relativbewegung dieser Rotationsscheiben zu der stillstehenden Scheibe 12 kann auch die stillstehende Scheibe 12 mittels der auf ihr angeordneten Funktionselemente 10 eine Funktionalität bereitstellen, insbesondere auf nachgiebigen Oberflächen, beispielsweise Haut, welche sich durch die Rotationsscheiben bewegt relativ zu der stillstehenden Scheibe 12 bewegen.

In alternativen Ausführungen können die erste Rotationsscheibe 7a und die direkt anschließend auf der anderen Seite der stillstehenden Scheibe 12 angeordnete Rotationsscheibe derart ausgestaltet und angeordnet sein, dass diese gegenläufig oszillierend rotieren.

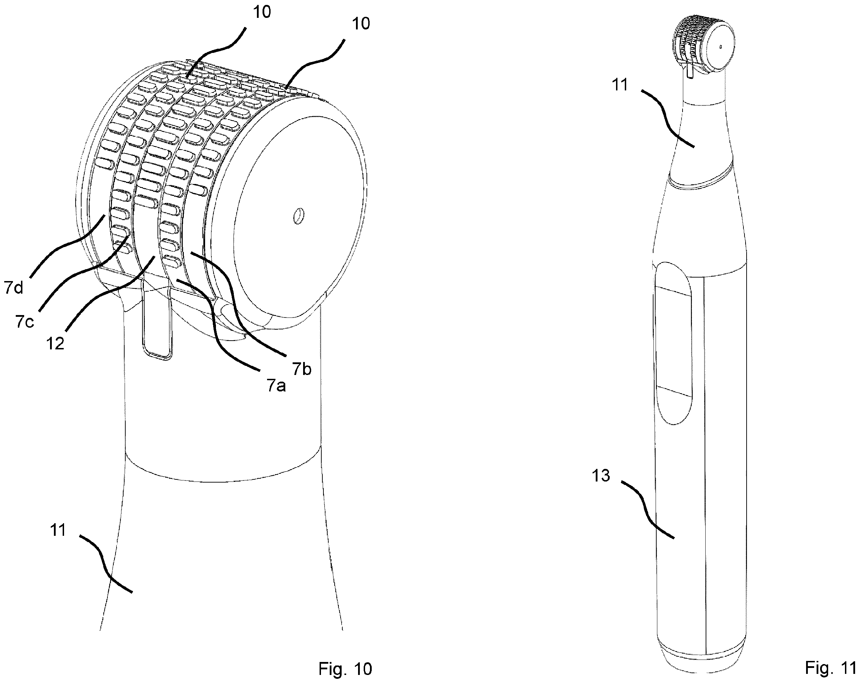

Die Fig. 10 zeigt eine zu der Ausgestaltung der Fig. 9 alternative Ausgestaltung eine Funktionsmodul, bei dem insgesamt vier Rotationsscheiben vorgesehen sind. In der gezeigten Ausgestaltung sind die erste Rotationsscheibe 7a und die direkt anschließend auf der anderen Seite der stillstehenden Scheibe 12 angeordnete dritte Rotationsscheibe 7c derart ausgestaltet und angeordnet, dass diese gleichläufig oszillierend rotieren.

In alternativen Ausführungen können die erste Rotationsscheibe 7a und die direkt anschließend auf der anderen Seite der stillstehenden Scheibe 12 angeordnete Rotationsscheibe derart ausgestaltet und angeordnet sein, dass diese gegenläufig oszillierend rotieren.

In der Fig. 11 ist ein Handgerät gezeigt, bei welchem das Funktionsmodul aus der Fig. 10 mit seinem Gehäuse 11 auf einem mit dem Handstück einer elektrischen Zahnbürste gebildeten Antriebsmodul 13 angeordnet ist.

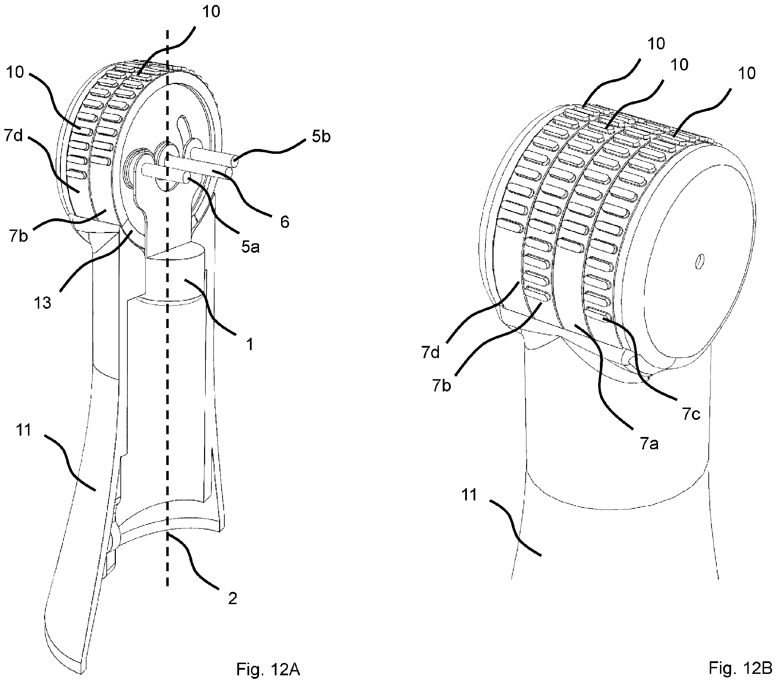

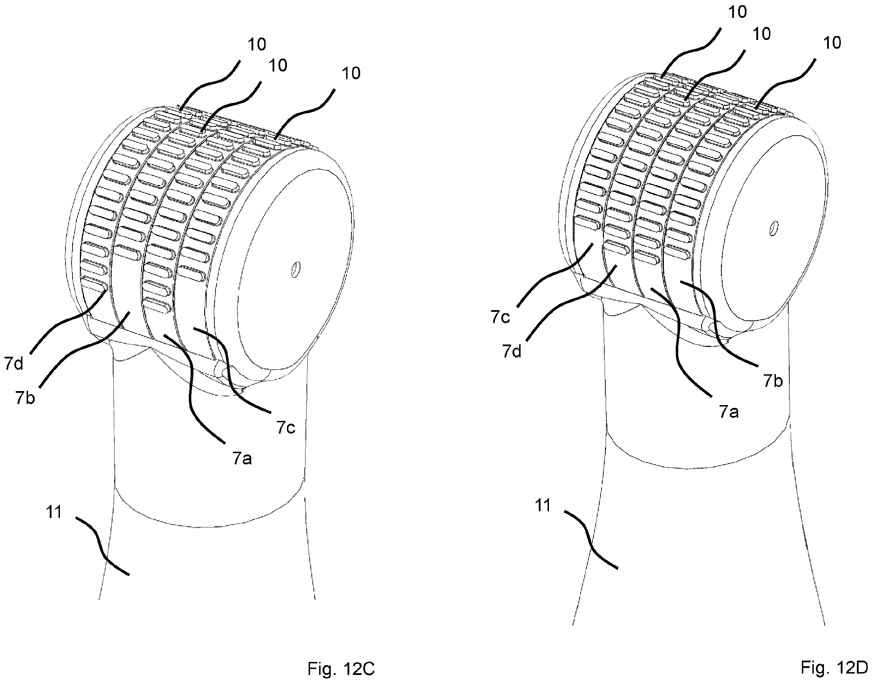

Die Fig. 12A zeigt eine alternative Ausgestaltung eines Funktionsmoduls in einer geschnittenen Teilansicht, die Fig. 12B zeigt den distalen Teil dieses Funktionsmodul in fertiggestelltem Zustand. Im Vergleich zu den zuvor beschriebenen Ausführungen ist das Funktionsmodul der Fig. 12 ohne eine stillstehende Scheibe gebildet. Die erste Rotationsscheibe 7a und die hierzu gegenläufig oszillierend rotierende zweite Rotationsscheibe 7b sind auf entlang der Erstreckungsrichtung der Rotationsachse 6 gegenüberliegenden Seiten des Antriebsbauteils 1 angeordnet. Um dies zu ermöglichen, ist ein distaler Abschnitt des Antriebsbauteils 1 schmal ausgestaltet und zumindest die erste und die zweite Rotationsscheibe 7a, 7b weisen eine jeweilige Aussparung 13 auf, in welcher der distale Abschnitt des Antriebsbauteils angeordnet ist und sich bewegt. Hierbei korrespondiert bevorzugt die jeweilige Aussparung 13 mit der Blechdicke und ist sektoriell gerade so gestaltet, dass sie bei beiderseitiger maximaler Rotation stets nach außen hin verdeckt bleibt, um ein Einklemmen von Haut oder Hautanhangsgebilden (Haare) bei einer Anwendung zu verhindern.

Die Figuren 12B und 12C veranschaulichen die gegenläufig-oszillierende Bewegung der Rotationsscheiben. Die Figuren zeigen die Rotationsscheiben in endgegengesetzten Endstellungen der Rotationsbewegung. Anhand dieser dargestellten Endstellungen ist zu erkennen, dass die beidseitig des Antriebsbauteils 1 angeordneten Rotationsscheiben (erste Rotationsscheibe 7a und zweite Rotationsscheibe 7b) gegenläufig rotieren.

Die Fig. 12D zeigt eine alternative Ausgestaltung, bei der im Vergleich zu der in den Figuren 12B und 12C gezeigten Variante die innenliegenden Rotationsscheiben gleichläufig rotieren. Hier sind also die beidseitig direkt neben dem Antriebsbauteil 1 liegenden Rotationsscheiben 7a, 7d gleich ausgerichtet. Die Rotationsscheiben 7b, 7c rotieren hierzu gegenläufig und somit im Gleichlauf miteinander. Im Übrigen entspricht die Ausgestaltung gemäß Fig. 12D den Ausgestaltungen gemäß den Figuren 12A bis 12C, insbesondere bezüglich des blechartig schmal ausgestalteten distalen Abschnitts des Antriebsbauteils 1.

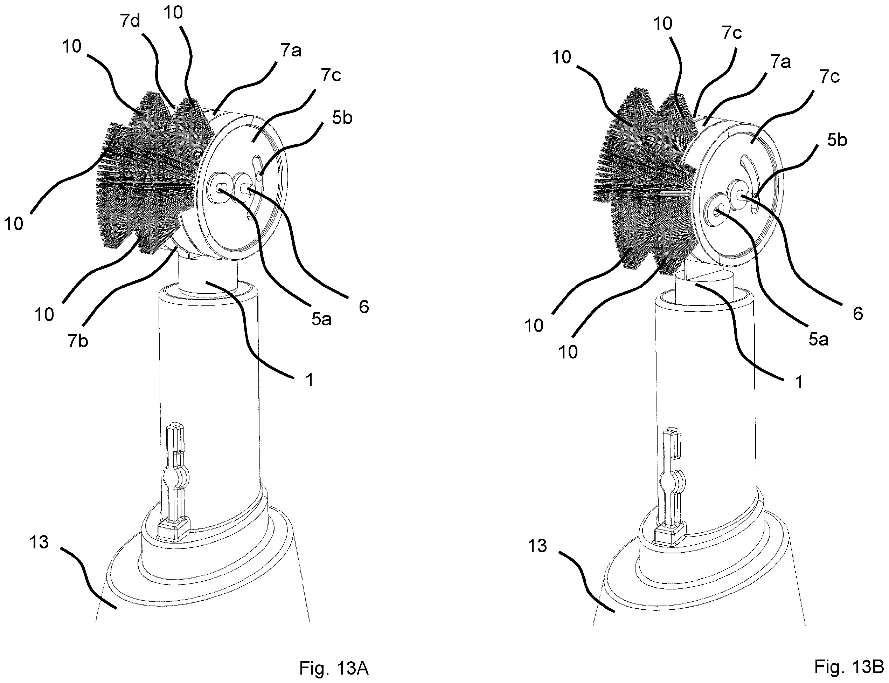

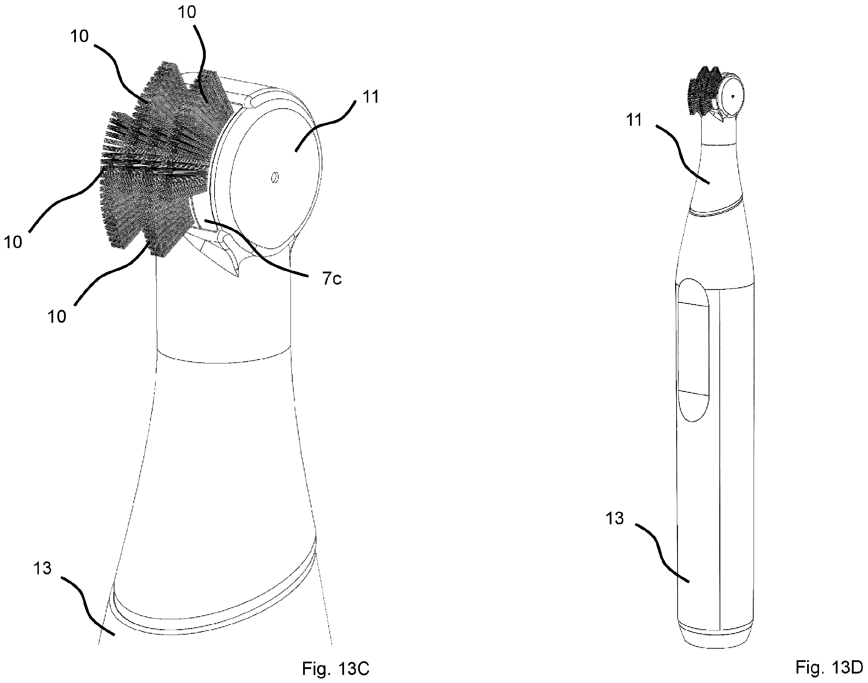

In den Figuren 13A bis 13D ist eine alternative Ausgestaltung eines Funktionsmoduls als Bürstenmodul gezeigt. Die Rotationsscheiben 7a, 7b, 7c, 7d sind auf einem Teil ihres Umfangs mit als Borsten ausgestalteten Funktionselementen 10 versehen. Das Funktionsmodul ist ohne stillstehende Scheibe gebildet. Die gegenläufige Rotation und somit Bürstbewegung des Funktionsmoduls ist im Vergleich der Figuren 13A und 13B erkennbar, wobei das Gehäuse 11 in diesen Figuren zur besseren Erkennbarkeit ausgeblendet ist. In den Figuren 13C und 13D ist das Funktionsmodul auf einem Antriebsbauteil 13 angeordnet und zusammen ein Handgerät bildend dargestellt. Es ist erkennbar, dass das Gehäuse 11 die Rotationsscheiben 7a, 7b, 7c, 7d im gesamten Bereich umgibt, der nicht Teil des Bewegungsbereichs der Borsten-Funktionselemente 10 ist. Auf diese Weise kann insbesondere ein Verletzungsrisiko an beweglichen Teilen verringert oder vermieden sein. Das in der Fig. 13D gezeigte Handgerät kann insbesondere als elektrische Zahnbürste zum Einsatz kommen.

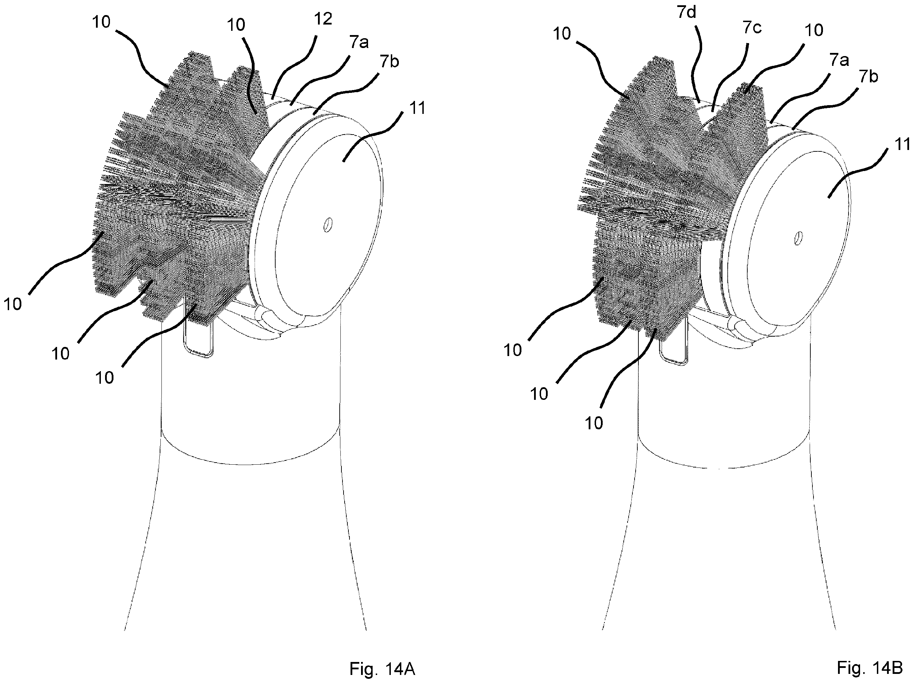

Die Figuren 14A und 14B zeigen eine alternative Ausgestaltung eines Funktionsmoduls, bei der im Vergleich zu der Ausführung der Fig. 13 eine mittig angeordnete stillstehende Scheibe 12 mit Borsten-Funktionselementen 10 vorgesehen ist, wobei die direkt beidseitig der stillstehenden Scheibe 12 angeordneten Rotationsscheiben 7a, 7c gleichläufig oszillierende rotieren. In der Ausgestaltung der Figuren 14A und 14B erstreckt sich das Gehäuse 11 nicht umfangsseitig um die Rotationsscheiben 7b, 7b, 7c, 7d. In optionalen Ausgestaltungen kann zur Vermeidung von Verletzungen und/oder Fehlfunktionen durch eingezogene Gegenstände die Ränder der Rotationsscheiben so ausgestaltet sein, dass sie, insbesondere nutartig, ineinander (bzw. in seitlich angrenzende Gehäuseabschnitte) greifen.

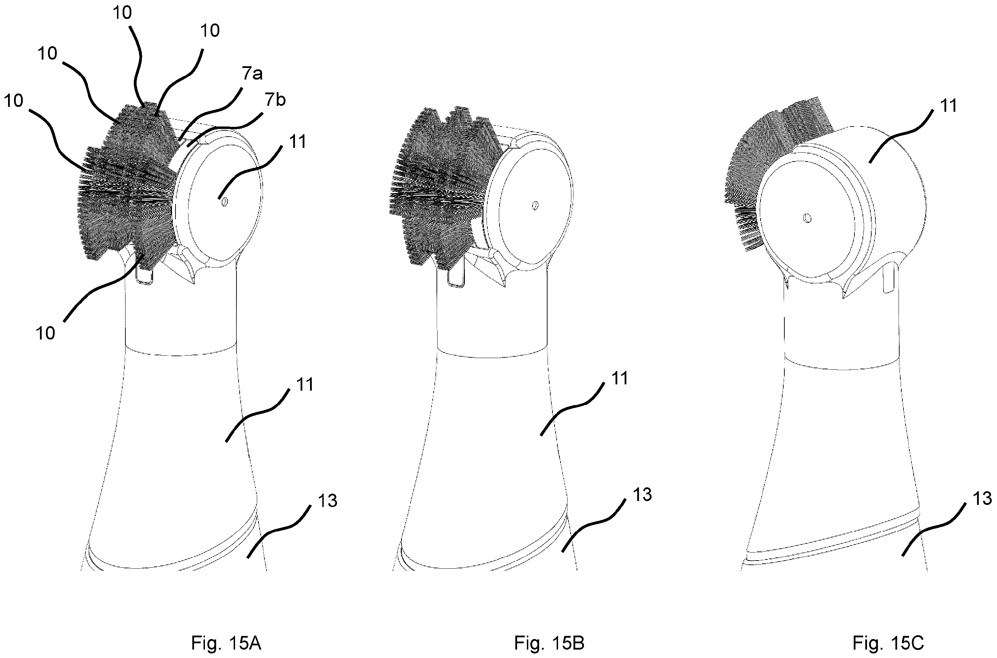

Im Vergleich zu den Ausgestaltungen der Figuren 14A und 14B ist bei der Ausgestaltung des in den Figuren 15A, 15B und 15C gezeigten Funktionsmoduls das Gehäuse 11 so ausgestaltet, dass die Rotationsscheiben 7a, 7b, 7c, 7d im gesamten Bereich umgibt, der nicht Teil des Bewegungsbereichs der Borsten-Funktionselemente 10 ist.

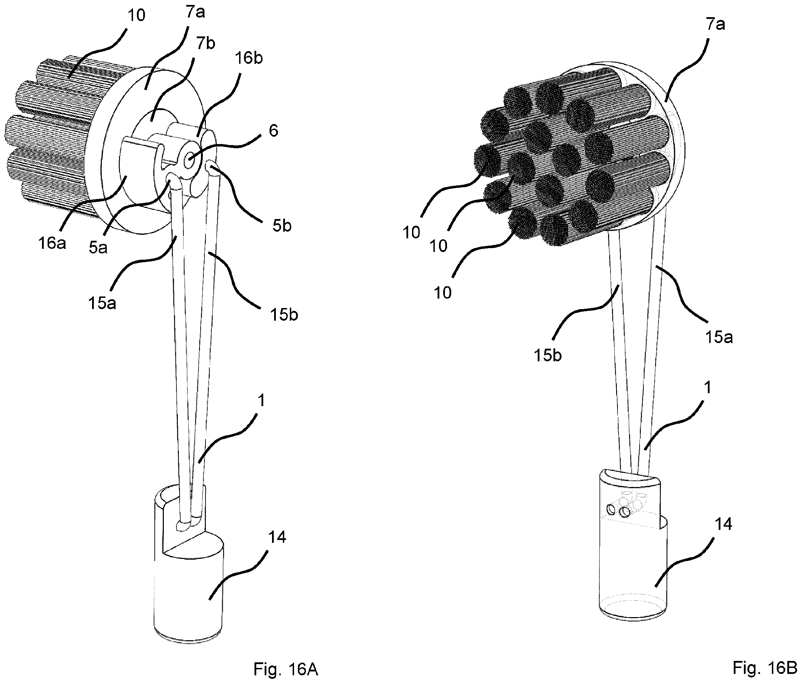

In den Figuren 16A bis 16D ist ein Funktionsmodul gezeigt, bei dem zwei ineinanderlaufende Rotationsscheiben 7a, 7b auf einer ihrer Stirnflächen borstenartige Funktionselemente 10 aufweisen, um ein Bürstenmodul zu bilden, insbesondere ein Zahnbürstenmodul.

Das Antriebskonzept ist aus den Teilansichten der Fig. 16A und 16B ersichtlich. Ein Antriebsbauteil ist mehrteilig gebildet. An ein proximales Endelement 14, das eingerichtet ist, einer oszillierenden linearen Antriebsbewegung entlang einer Längsrichtung des Funktionsmoduls angetrieben zu werden, schließen sich zwei beweglich mit dem proximalen Endelement 14 verbundene distale Endelemente 15a, 15b an. Die distalen Endelemente 15a, 15b enden in als Stiften 5a, 5b ausgestalteten Anschlussstellen 3a, 3b. Rotationsanschlussstellen 8a, 8b der Rotationsscheiben 7a, 7b sind durch Löcher mit kreisförmigem Querschnitt gebildet, in denen jeweils einer der Stifte 5a, 5b angeordnet ist. Hierbei sind die Rotationsanschlussstellen 8a, 8b in Ausformungen 16a, 16b der Rotationsscheiben 7a, 7b ausgebildet, welche gleichzeitig als Massenausgleich dienen, um ein unrundes Laufen des Funktionsmoduls zu minimieren oder zu verhindern.

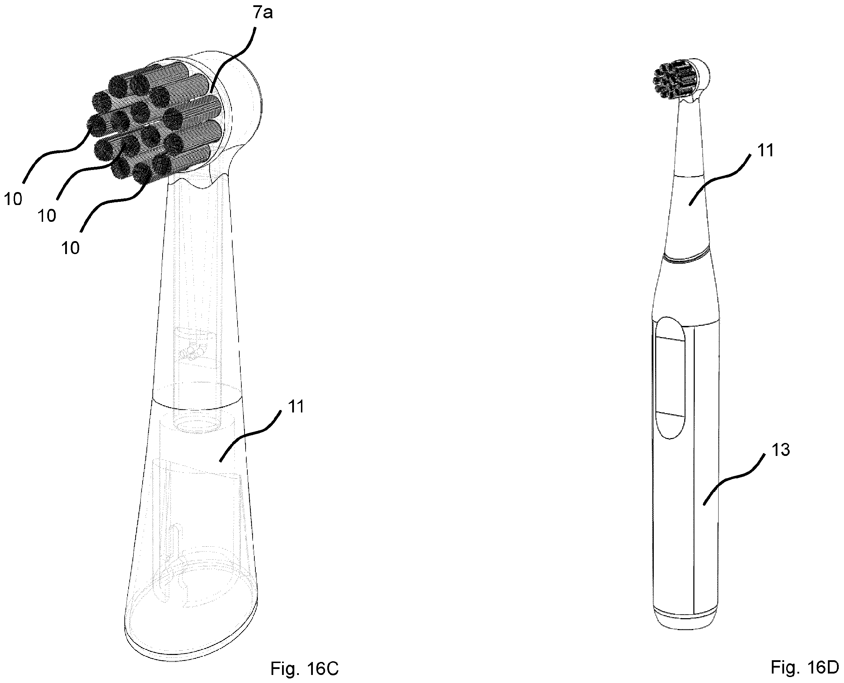

Eine Auf- oder Abbewegung des proximalen Endelements 14 entlang der Längsrichtung 2 bewirkt über die distalen Endelemente 15a, 15b eine jeweilige Auf- oder Abbewegung der Anschlussstelle 3a, 3b, nämlich der Stifte 5a, 5b entlang der Längsrichtung 2 und somit eine gegenläufige Rotation der ersten Rotationsscheibe 7a und der zweiten Rotationsscheibe 7b um die Rotationsachse 6, da die Stifte 5a, 5b jeweils eine die Längsbewegung verursachende Antriebskraft über Wände der die Rotationsanschlussstellen 8a, 8b bildenden Löcher auf die Rotationsscheiben 7a, 7b überträgt und hierbei in eine Rotation wandelt. Der Ausgleich der Bewegung in Querrichtung eines jeweiligen Punkts auf den Rotationsscheiben 7a, 7b bei einer Rotation der betreffenden Rotationsscheibe ist bei der Ausgestaltung der Fig. 16 durch die Beweglichkeit der Verbindung der distalen Endelemente 15a, 15b mit dem proximalen Endelement 14 sichergestellt, da sich hierdurch die Stifte 5a, 5b in der Querrichtung bewegen können.

Wie insbesondere in der Fig. 16B erkennbar ist, ist somit ein Funktionsmodul geschaffen, bei dem zwei ineinander angeordnete, gegenläufig oszillierend rotierende Borstenbereiche gebildet sind. Beispielsweise kann ein solches Funktionsmodul als Zahnbürstenaufsatz zum Einsatz kommen.

Die Fig. 16C zeigt das Funktionsmodul in seiner Gesamtheit einschließlich Gehäuse 11. In der Fig. 16D ist ein Handgerät gezeigt, welches gebildet ist, indem das Funktionsmodul auf ein Antriebsmodul 13 montiert ist.

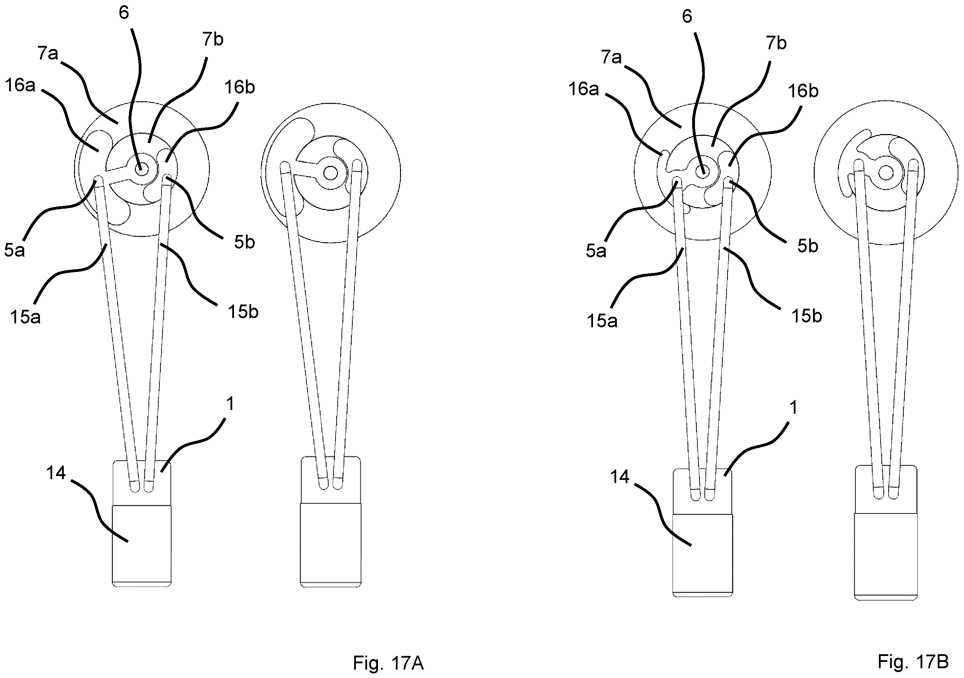

Die Figuren 17A und 17B illustrieren eine Möglichkeit, Rotationsgeschwindigkeiten der ersten Rotationsscheibe 7a und der zweiten Rotationsscheibe 7b gemäß einer gegebenen Anwendung vorteilhaft aufeinander abzustimmen. Die Fig. 17A und die Fig. 17B zeigen jeweils Teilansichten von zwei Bewegungspositionen eines jeweiligen Funktionsmoduls, welches eine Variante des Funktionsmoduls aus der Fig. 16 darstellt. Die Funktionsmodul der Fig. 17A und 17B unterscheiden sich voneinander und von dem Funktionsmodul der Fig. 16 durch die Anordnung der ersten Anschlussstelle 3a, nämlich dem betreffenden Stift 5a an der ersten Rotationsscheibe 7a, nämlich in dem radialen Abstand von der Rotationsachse 6, an dem die erste Anschlussstelle gebildet ist. Durch Variation dieses radialen Abstands kann die Rotationsgeschwindigkeit der ersten Rotationsscheibe 7a bei gegebener linearer Bewegungsgeschwindigkeit des proximalen Endelements 14 eingestellt werden, insbesondere relativ zu der Rotationsgeschwindigkeit der zweiten Rotationsscheibe 7b. Hierbei bewirkt ein größerer radialer Abstand einen größeren Hebelarm für den Antrieb der Rotation und somit eine geringere Rotationsgeschwindigkeit. Folglich ist bei gleicher linearer Geschwindigkeit die Rotationsgeschwindigkeit der ersten Rotationsscheibe 7a bei der Ausführung gemäß Fig. 17A kleiner als bei der Ausführung gemäß Fig. 17B.

Analog kann auch der radiale Abstand von der Rotationsachse 6 der zweiten Anschlussstelle 3b, nämlich dem betreffenden Stift 5b, an der zweiten Rotationsscheibe 7b variiert werden, um die Rotationsgeschwindigkeit der zweiten Rotationsscheibe 7b wie für eine gegebene Anwendung gewünscht anzupassen.

Durch die Wahl des radialen Abstands für die erste bzw. die zweite Anschlussstelle 3a, 3b lässt sich zusammen mit der Rotationsgeschwindigkeit gemäß dem resultierenden Hebelarm auch die Kraftübertragung gezielt beeinflussen.

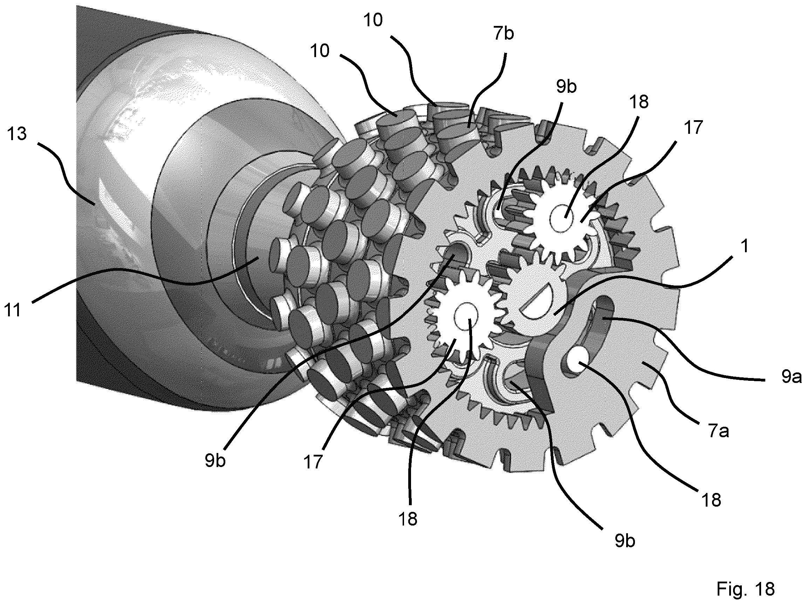

Die Fig. 18 zeigt eine alternative Ausgestaltung eines auf einem Antriebsmodul 13 angeordneten Funktionsmoduls. Hierbei stellt das Antriebsmodul 13 eine oszillierende rotatorische Antriebsbewegung bereit, wie dies beispielsweise für elektrische Zahnbürsten bekannt ist. Das Antriebsbauteil 1 ist hier als langgestrecktes Zahnrad ausgestaltet, welches, durch das Antriebsmodul 13 angetrieben, ebenfalls eine oszillierende rotatorische Bewegung um eine Rotationsachse ausführt, die entlang der Längsrichtung des Funktionsmoduls verläuft. Hierbei wird eine mit einer ersten Innenverzahnung gebildete erste Rotationsscheibe 7a über Planetenräder 17 angetrieben, so dass die erste Rotationsscheibe 7a eine zu dem im Sinne eines Planetengetriebes als Sonnenrad fungierenden Antriebsbauteil 1 gegenläufige oszillierende rotatorische Bewegung ausführt. Eine zweite Rotationsscheibe 7a ist mit einer zweiten Innenverzahnung mit geringerem Durchmesser gebildet, welche direkt auf das Antriebsbauteil 1 aufgesetzt ist und die somit eine mit letzterem gleichläufige oszillierende rotatorische Bewegung ausführt. Das Funktionsmodul weist drei Stifte 18 auf. Um die in der Fig. 18 oben dargestellten beiden Stifte 18 drehen sich die Planeten 17. Die Stifte 18 verbinden die stillstehenden Anteile des Funktionsmoduls miteinander. Die Stifte 18 durchgreifen die Rotationsscheiben 7a, 7b an deren konzentrischen gebogenen Langloch-Aussparungen 9a, 9b, sodass sich die Rotationscheiben auf einer gemeinsamen Rotationsachse, der Mittelachse des Funktionsmoduls und des Antriebsbauteils 1 bewegen und somit durch die Stifte 18 konzentrisch gestützt und geführt werden. Die Funktionselemente 10 des Funktionsmoduls gemäß Fig. 18 sind zylinderförmig, also prismatisch mit kreisförmiger Grundfläche ausgebildet. Durch die scharf ausgestaltete Deckflächenkanten der Funktionselemente 10 wird eine abrasive Wirkung erreicht.

Gleichzeitig verhindert bzw. mindert die Ausgestaltung mit kreisrunder Grundfläche ein Einklemmen sich wölbender Haut zwischen seitlich benachbarten Funktionselementen 10 auf gegenläufig rotierenden Rotationsscheiben.

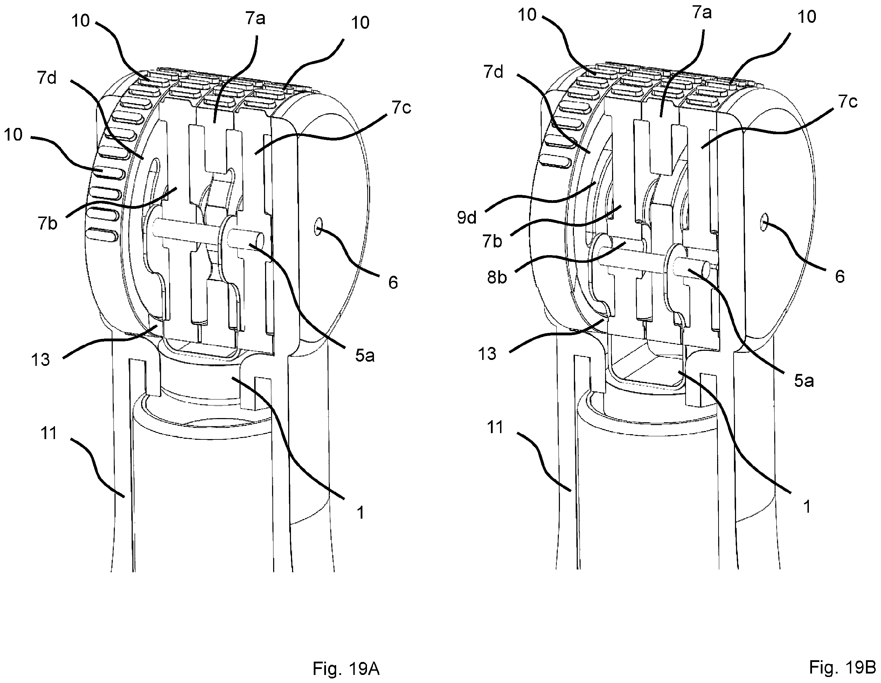

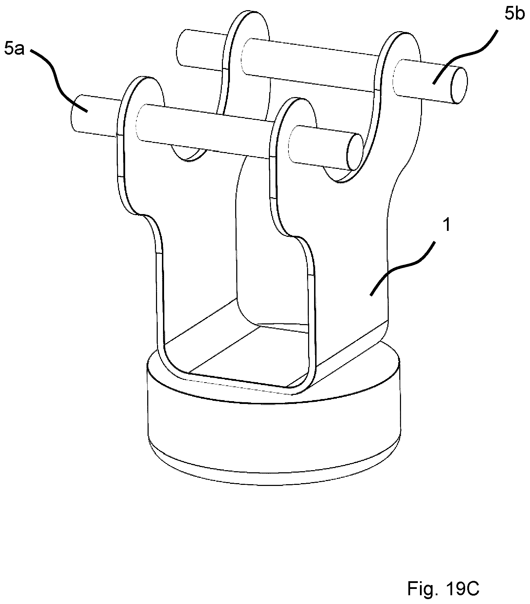

Die Figuren 19A und 19B zeigen eine Variante der in den Figuren 12A bis 12D gezeigten Ausgestaltungen. Im Vergleich zu der letztgenannten Ausgestaltung weist das Antriebsbauteil 1 gemäß der Ausgestaltung der Figuren 19A und 19B zwei als Blechfortsätze ausgebildete distale Abschnitte auf. Die Fig. 19C zeigt eine Teilansicht eines solchen Antriebsbauteils 1. Wie in der Fig. 19C zu erkennen, sind die Blechfortsätze zueinander parallel und symmetrisch zur Mittelebene beabstandet, sodass die Stifte 5a und 5b über den proximalen Abschnitt des Antriebsbauteils 1 an jeweils zwei Stellen mit der Antriebkraft beaufschlagt werden können. Hierdurch kann eine verbesserte Führung erreicht und/oder ein Verkanten verhindert werden. In einer beispielhaften Ausgestaltung ist der proximale Abschnitt des Antriebsbauteils 1 mittels Drehen hergestellt und die Blechfortsätze sind Biegeblechteile, die (beispielsweise mittels Widerstands-/Punktschweißen oder Nietverbindung) an dem proximalen Abschnitt befestigt sind.

Bei der Anordnung gemäß den Figuren 19A und 19B liegen zwei Rotationsscheiben 7a, 7b zwischen den Blechfortsätzen, welche sich gegenläufig bewegen. Die Figuren 19A und 19B zeigen hierbei unterschiedliche Betriebszustände mit verschiedenen Rotationspositionen der Rotationsscheiben 7a, 7b, 7c, 7d. In alternativen Ausgestaltungen kann nur eine Rotationsscheibe oder auch mehr als zwei Rotationsscheiben zwischen den Blechfortsätzen angeordnet sein und/oder die zwischen den Blechfortsätzen liegenden Rotationsscheiben können sich gleichläufig bewegen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Antriebsbauteil
- 2: Längsrichtung
- 3a, 3b: Anschlussstelle
- 4a, 4b: Loch
- 5a, 5b: Stift
- 6: Rotationsachse
- 7a, 7b, 7c, 7d: Rotationsscheibe
- 8a, 8b: Rotationanschlussstelle
- 9a, 9b, 9c, 9d: Aussparung
- 10: Funktionselement
- 11: Gehäuse
- 12: stillstehende Scheibe
- 13: Antriebsmodul
- 14: proximales Endelement
- 15a, 15b: distales Endelement
- 16a, 16b: Ausformung
- 17: Planetenrad
- 18: Stift

## Patentansprüche

1. Funktionsmodul zum Bereitstellen oszillierender Bewegungen für ein Handgerät, mit
- einer Rotationsachse (6), welche bevorzugt senkrecht zu einer Längsrichtung (2) des Funktionsmoduls verlaufend angeordnet ist;
- einem Antriebsbauteil (1) mit einer Antriebsschnittstelle, wobei
- das Antriebsbauteil (1) eingerichtet ist, über die Antriebsschnittstelle entsprechend einer oszillierenden Antriebsbewegung angetrieben zu werden, derart, dass sich das Antriebsbauteil (1) oszillierend bewegt,
- einer ersten Rotationsscheibe (7a), welche um die Rotationsachse (6) rotierbar angeordnet und eingerichtet ist, eine durch die oszillierende Bewegung des Antriebsbauteils angetriebene erste oszillierende Rotation um die Rotationsachse (6) auszuführen; und
- einer zweiten Rotationsscheibe (7b), welche um die Rotationsachse (6) rotierbar angeordnet und eingerichtet ist, eine durch die oszillierende Bewegung des Antriebsbauteils angetriebene zweite oszillierende Rotation um die Rotationsachse (6) auszuführen, wobei die zweite oszillierende Rotation gegenläufig zu der ersten oszillierenden Rotation ist.

2. Funktionsmodul nach Anspruch 1, wobei das Antriebsbauteil (1) einstückig ausgebildet ist.

3. Funktionsmodul nach Anspruch 1 oder 2, wobei
- das Antriebsbauteil (1) eingerichtet ist, über die Antriebsschnittstelle entsprechend einer oszillierenden linearen Antriebsbewegung entlang einer Längsrichtung (2) des Funktionsmoduls angetrieben zu werden, derart, dass sich das Antriebsbauteil (1) entlang der Längsrichtung (2) oszillierend linear bewegt,
- das Antriebsbauteil (1) eine erste Anschlussstelle (3a) und eine zweite Anschlussstelle (3b) aufweist;
- die erste Anschlussstelle (3a) und die zweite Anschlussstelle (3b) entlang einer Querrichtung, welche senkrecht sowohl zu der Längsrichtung (2) als auch zu der Rotationsachse (6) verläuft, auf gegenüberliegenden Seiten der Rotationsachse (6) angeordnet sind;
- die erste Anschlussstelle (3a) und die zweite Anschlussstelle (3b) bei einem Antrieb des Antriebsbauteils (1) jeweils eine oszillierende Linearbewegung entlang der Längsrichtung (2) ausführen;
- die erste Rotationsscheibe (7a) eine erste Rotationsanschlussstelle (8a) aufweist, welche mit der ersten Anschlussstelle derart verbunden ist, dass die oszillierende Linearbewegung der ersten Anschlussstelle auf die erste Rotationsanschlussstelle (8a) übertragen wird, um die erste oszillierende Rotation der ersten Rotationsscheibe (7a) um die Rotationsachse (6) zu bewirken; und
- die zweite Rotationsscheibe (7b) eine zweite Rotationsanschlussstelle (8b) aufweist, welche mit der zweiten Anschlussstelle derart verbunden ist, dass die oszillierende Linearbewegung der zweiten Anschlussstelle auf die zweite Rotationsanschlussstelle (8b) übertragen wird, um die zu der ersten oszillierenden Rotation gegenläufige zweite oszillierende Rotation der zweiten Rotationsscheibe (7b) um die Rotationsachse (6) zu bewirken.

4. Funktionsmodul nach Anspruch 3, wobei die Verbindung zwischen der ersten Anschlussstelle und der ersten Rotationsanschlussstelle (8a) sowie die Verbindung zwischen der zweiten Anschlussstelle und der zweiten Rotationsanschlussstelle (8b) über ein jeweiliges stiftförmiges Verbindungselement erfolgt.

5. Funktionsmodul nach Anspruch 4, wobei jeweils ein stiftförmiges Verbindungselement als Teil der ersten Anschlussstelle und als Teil der zweiten Anschlussstelle gebildet ist.

6. Funktionsmodul nach einem der Ansprüche 3 bis 5, wobei die erste Rotationsanschlussstelle (8a) und/oder die zweite Rotationsanschlussstelle (8b) als Langloch gebildet ist, welches gerade in radialer Richtung der ersten Rotationsscheibe (7a) bzw. der zweiten Rotationsscheibe (7b) verläuft.

7. Funktionsmodul nach einem der Ansprüche 3 bis 6, wobei
- die erste Rotationsscheibe (7a) eine erste Aussparung (9a) aufweist, welche im Bereich der zweiten Anschlussstelle derart angeordnet ist, dass die oszillierende Linearbewegung der zweiten Anschlussstelle nicht auf die erste Rotationsscheibe (7a) übertragen wird; und
- die zweite Rotationsscheibe (7b) eine zweite Aussparung (9b) aufweist, welche im Bereich der ersten Anschlussstelle derart angeordnet ist, dass die oszillierende Linearbewegung der ersten Anschlussstelle nicht auf die zweite Rotationsscheibe (7b) übertragen wird.

8. Funktionsmodul nach Anspruch 7, wobei die erste Aussparung (9a) und/oder die zweite Aussparung (9b) als gekrümmtes Langloch gebildet ist, wobei die Positionierung des gekrümmten Langlochs relativ zu der Rotationsachse (6) und der Verlauf der Krümmung des gekrümmten Langlochs derart ausgestaltet sind, dass ein Abstand der zweiten Anschlussstelle bzw. der ersten Anschlussstelle relativ zu einer entlang der Krümmung verlaufenden Mittellinie des gekrümmten Langlochs bei einer linearen Bewegung des Antriebsbauteils (1) und hieraus resultierender Rotation der ersten und/oder zweiten Rotationsscheibe (7a, 7b) unverändert bleibt.

9. Funktionsmodul nach einem der vorangehenden Ansprüche, wobei die erste Rotationsscheibe (7a) und die zweite Rotationsscheibe (7b) in Richtung der Rotationsachse (6) auf gegenüberliegenden Seiten des Antriebsbauteils (1) angeordnet sind.

10. Funktionsmodul nach einem der Ansprüche 1 bis 7, wobei die erste Rotationsscheibe (7a) und die zweite Rotationsscheibe (7b) in Richtung der Rotationsachse (6) auf derselben Seite des Antriebsbauteils (1) angeordnet sind.

11. Funktionsmodul nach einem der vorangehenden Ansprüche, wobei die erste Rotationsscheibe (7a) und/oder die zweite Rotationsscheibe (7b) auf ihrer Umfangsseite und/oder auf einer oder beiden Stirnseiten Funktionselemente (10) aufweist, welche die oszillierende Rotation ausführen und eingerichtet sind, mittels der oszillierenden Rotation eine gewünschte Funktion des Funktionsmoduls bereitzustellen.

12. Funktionsmodul nach Anspruch 11, wobei die Funktionselemente (10) aus einem oder mehreren der folgenden Gruppe gewählt sind: Borsten, abrasive Vorsprünge, massierende Vorsprünge, Schleifelemente, Schneidelemente.

13. Funktionsmodul nach einem der vorangehenden Ansprüche, mit
- einer dritten Rotationsscheibe (7c), welche um die Rotationsachse (6) rotierbar angeordnet und eingerichtet ist, eine durch die oszillierende Bewegung des Antriebsbauteils angetriebene dritte oszillierende Rotation der dritten Rotationsscheibe (7c) um die Rotationsachse (6) auszuführen, wobei die dritte oszillierende Rotation gleichläufig zu der ersten oszillierenden Rotation ist; und
- einer vierte Rotationsscheibe (7d), welche um die Rotationsachse (6) rotierbar angeordnet und eingerichtet ist, eine durch die oszillierende Bewegung des Antriebsbauteils angetriebene vierte oszillierende Rotation der vierten Rotationsscheibe (7d) um die Rotationsachse (6) auszuführen, wobei die vierte oszillierende Rotation gegenläufig zu der ersten oszillierenden Rotation ist.

14. Funktionsmodul nach Anspruch 13, soweit auf Anspruch 3 zurückbezogen, wobei
- die dritte Rotationsscheibe (7c) eine dritte Rotationsanschlussstelle aufweist, welche mit der ersten Anschlussstelle derart verbunden ist, dass die oszillierende Linearbewegung der ersten Anschlussstelle auf die dritte Rotationsanschlussstelle übertragen wird, um die zu der ersten oszillierenden Rotation gleichläufige dritte oszillierende Rotation der dritten Rotationsscheibe (7c) um die Rotationsachse (6) zu bewirken, und optional eine dritte Aussparung (9c) aufweist, welche im Bereich der zweiten Anschlussstelle derart angeordnet ist, dass die oszillierende Linearbewegung der zweiten Anschlussstelle nicht auf die dritte Rotationsscheibe (7c) übertragen wird; und
- die vierte Rotationsscheibe (7d) eine vierte Rotationsanschlussstelle aufweist, welche mit der zweiten Anschlussstelle derart verbunden ist, dass die oszillierende Linearbewegung der zweiten Anschlussstelle auf die vierte Rotationsanschlussstelle übertragen wird, um die zu der ersten oszillierenden Rotation gegenläufige vierte oszillierende Rotation der vierten Rotationsscheibe (7d) um die Rotationsachse (6) zu bewirken, und optional eine vierte Aussparung aufweist, welche im Bereich der ersten Anschlussstelle derart angeordnet ist, dass die oszillierende Linearbewegung der ersten Anschlussstelle nicht auf die vierte Rotationsscheibe (7d) übertragen wird.

15. Funktionsmodul nach einem der vorangehenden Ansprüche, mit einem Gehäuse (11), wobei
- das Antriebsbauteil (1) in dem Gehäuse (11) angeordnet ist,
- die Rotationsscheiben (7a, 7b, 7c, 7d) wenigstens teilweise in dem Gehäuse (11) angeordnet sind, und
- das Gehäuse (11) mit einem Antriebsmodul (13) verbindbar ist, derart, dass eine von dem Antriebsmodul (13) bereitgestellte oszillierende lineare Antriebsbewegung das Antriebsbauteil (1) antreibt.

16. Handgerät, mit
- einem Antriebsmodul (13), welches eingerichtet ist, eine oszillierende Antriebsbewegung an einer Antriebsmodul-Antriebsschnittstelle bereitzustellen, und
- einem Funktionsmodul nach einem der vorangehenden Ansprüche, welches mit dem Antriebsmodul (13) derart verbunden ist, dass die an der Antriebsmodul-Antriebsschnittstelle bereitgestellte oszillierende Antriebsbewegung das Antriebsbauteil (1) antreibt.
